# EUROPÄISCHE PATENTSCHRIFT

(11) **EP 2 035 487 B1**
(45) Veröffentlichungstag und Bekanntmachung des Hinweises auf die Patenterteilung: **11.05.2011**
(21) Anmeldenummer: 07765035.6
(22) Anmeldetag: 04.07.2007
(51) Int. Cl.: C08G 77/46, C08L 33/10, C08L 101/00, C09D 133/00, C09D 201/00, C09D 5/00

(54) **POLYHYDROXYFUNKTIONELLE POLYSILOXANE, VERFAHREN ZU IHRER HERSTELLUNG UND IHRE VERWENDUNG**
POLYHYDROXYFUNCTIONAL POLYSILOXANES, METHOD FOR THE PRODUCTION AND USE THEREOF
POLYSILOXANES POLYHYDROXYFONCTIONNELS, LEUR PROCÉDÉ DE PRÉPARATION ET LEUR UTILISATION

(30) Priorität: 04.07.2006 DE 102006031152
(43) Veröffentlichungstag der Anmeldung: 18.03.2009
(73) Patentinhaber: BYK-Chemie GmbH, 46483 Wesel (DE)
(72) Erfinder: FRANK, Albert, 46509 Xanten (DE); GRIESEL, Wolfgang, 46499 Hamminkeln (DE); VALENTINA, Petra, Della, 46537 Dinslaken (DE); VORDERWÜLBEKE, Michaela, 46459 Rees (DE)
(74) Vertreter: Leifert & Steffan
(86) Internationale Anmeldenummer: PCT/EP2007/005895
(87) Internationale Veröffentlichungsnummer: WO 2008/003470

(56) Entgegenhaltungen:
- WO-A-02/40572
- WO-A-02/092660
- DE-A1- 4 104 270
- JP-A- 10 316 540
- US-A- 4 431 789

## Beschreibung

Die vorliegende Erfindung betrifft polyhydroxyfunktionelle Polysiloxane, die sich durch die Addition polyhydroxyfunktioneller Allylpolyether an Alkyl-Wasserstoff-Siloxane herstellen lassen.

Es ist bekannt, Beschichtungen und polymeren Formmassen Polysiloxane zuzusetzen, um bestimmte Eigenschaften zu erzielen, beispielsweise eine verbesserte Kratzbeständigkeit oder einen verbesserten Verlauf bei Möbel- und Automobillacken. Der Einsatz der Polysiloxane ist weit gestreut und sehr vielschichtig.

Polyhydroxyfunktionelle Polysiloxane sind im Prinzip aus zahlreichen Patentschriften bekannt.

US 3,381,019 beschreibt die Herstellung von Siloxan-Alkoholethern durch die Umsetzung von polyhydroxyfunktionellen Allylverbindungen an Si-H-funktionelle Polysiloxane. Die entstehenden Verbindungen werden als Schaumstabilisatoren und als Entschäumer für wäßrige Systeme beschrieben.

US 4,640,940 beschreibt die Herstellung Polyol-terminierter Silikone und den Einsatz dieser Verbindungen mit freien OH-Gruppen oder ihrer Derivate in härtbaren bzw. strahlenhärtbaren Zusammensetzungen.

US 4,431,789 beschreibt die Herstellung von Organosiloxanen mit alkoholischen Hydroxygruppen. Die Verbindungen werden hergestellt durch die Hydrosilylierung von Methyl-Wasserstoff-Siloxanen und Polyglycerinen, die eine terminale Allylgruppe aufweisen. Die so erhaltenen Verbindungen können als nichtionische oberflächenaktive Polysiloxane eingesetzt werden.

In der JP 10316540 werden Umsetzungsprodukte aus Methyl-Wasserstoff-Siloxanen und Allyl-Polyglycerinen, die denen In der US 4,431,789 sehr ähnlich sind, als Haarkonditionierungsmittel beschrleben.

US 6,916,992 und US 5,939,491 beschreiben Polyslloxanpolyole mit primären OH-Gruppen sowie härtbare Beschichtungen, die diese Polysiloxanpolyole enthalten. Diese Beschichtungen sollen sich durch verbesserte Haftung, Kratzfestigkeit und hohen Glanz auszeichnen.

Die Aufgabe der vorliegende Erfindung bestand In der Verbesserung der Eigenschaften von Besohichtungsmittein, polymeren Formmassen und Thermoplasten. Insbesondere bestand die Aufgabe darin, Beschichtungsmittel, polymere Formmassen und Thermoplasten bereitzustellen, die eine verbesserte anti-adhäsive und/oder schmutrabweisende Wirkung zeigen. Weiterhin sollen die zur Vermittlung dieser verbesserten Eigenschaften zugesetzten Additive die anderen Eigenschaften der Beschichtungsmittel, polymeren Formmassen oder Thermoplasten möglichst nicht beeinträchtigen. Die zugesetzten Additive sollen außerdem in relativ geringen Mengen ihre Wirksamkeit entfalten können. Die Beschichtungsmittel, polymeren Formmassen und Thermoplasten sollen ihre anti-adhäsive und/oder schmutzabweisende Wirkung weiterhin über einen langen Zeitraum von mehreren Jahren auch bei Außenbewitterung nahezu beibehalten. Dies sollte auch die Permanenz des anti-adhäslven und/oder schmutzabweisenden Effektes über mehrere Reinigungszyklen hinweg mit einschießen.

Überraschenderweise hat sich gezeigt, daß die oben beschriebenen Aufgaben durch polyhydroxyfunktionelle Polysiloxane, die sich durch die Addition mindestens eines verzweigten dendritischen polyhydroxyfunktionellen Allylpolyethers an ein SI-H-funktionelles Alkyl-Polysiloxan, wobei der Allylpolyether durch ringöffnende Polymerisation von Hydroxyoxetan mit einer oder mehreren Hydroxygruppen tragenden allyilschen Startverbindungen herstellbar ist, herstellen lassen, gelöst werden. Beschlchtungsmittel, polymere Formmassen oder Thermoplasten, denen diese Additionsprodukte zugesetzt werden, weisen ausgezeichnete anti-adhäsive und schmutzabweisende Eigenschaften auf. Die erfindungsgemäßen AdditionsProdukte beeinträchtigen auch die anderen Eigenschaften der Beschichtungsmittel, polymeren Formmassen oder Thermoplasten nicht wesentlich. Dabei können diese polyhydroxyfunktionellen Polysiloxane den Beschichtungsmitteln oder polymeren Formmassen In relativ geringen Mengen (Additivmengen) zugesetzt werden. Die physikallschen Eigenschaften der ursprünglichen Beschichtungsmittel, polymeren Formmassen und Thermoplasten beispielsweise in Bezug auf Korroslonsschutz, Glanzhaltung und Witterungsbeständigkeit werden durch die geringen Konzentrationen des Addltlvs nicht beeinträchtigt. Beschichtungsmittel, polymere Formmassen und Thermoplasten, die die erfindungsgemäßen Additionsprodukte enthalten, zeigen die gewünschten Eigenschaften in der Regel auch über einen Zeitraum von mehreren Jahren hinweg und behalten diese Eigenschaften auch über mehrere Reinigungszyklen hinweg bei.

Das erffndungsgemäße polyhydroxyfunktionelle Polyslloxan, das Beschichtungsmitteln, polymeren Formmassen und Thermoplasten zugesetzt werden kann, ist herstellbar über die Addition mindestens eines verzwelgten polyhydroxyfunktionellen Allylpolyethers an ein SI-H-funktionelles Polysiloxan. Der Ausdruck "verzweigter Polyether" steht hierbei für einen Polyether, In dem die Hauptkette und mindestens eine Seitenkette Polyetherbrücken enthält. Der mindestens eine verzweigte Polyether weist eine dendritische Struktur auf.

Bei dem Si-H-funktionellen Polysiloxan kann es sich um Kettenpolymer, ein cyclisches Polymer, ein verzwelgtes Polymer oder ein vernetztes Polymer handeln. Bevorzugt handelt es sich um ein Kettenpolymer oder ein verzweigtes Polymer. Besonders bevorzugt handelt es sich um ein Kettenpolymer. Bei den Si-H-funktionellen Alkyl-Polysiloxan handelt es sich vorzugsweise um ein Alkyl-Wasserstoff-Polysiloxan, das mit entsprechenden C₁-C₁₄-Alkylen, -Arylen oder -Aralkylen substitulert Ist. Bevorzugt handelt es sich bel dem Alkyl-Wasserstofi-Polysiloxan um ein Methyl-Wasserstoff-Polyslloxan.

Bevorzugter Gegenstand der Erfindung sind polyhydroxyfunktionelle kettenförmige Polysiloxane, die sich mit der folgenden allgemeinen Formel (I) darstellen lassen: 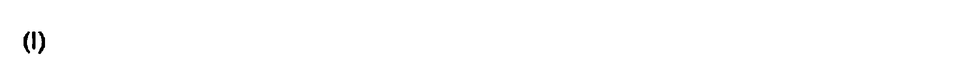 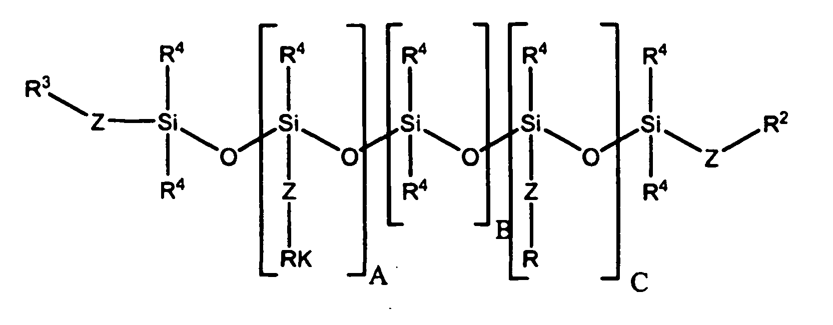 wobei
- Z: = C₁-C₁₄-Alkylen,
- RK: = unverzweigter Polyetherrest aus Alkylenoxid-Einheiten mit 1-6 Kohlenstoff- atomen, und/oder aliphatischer und/oder cycloaliphatischer und/oder aromatischer Polyesterrest mit einem gewichtsmittleren Molekulargewicht zwischen 200 und 4000 g/mol
- R: = polyhydroxyfunktioneller verzweigter Polyetherrest,
- R² und R³: unabhängig voneinander für C₁-C₁₄-Alkyl, -Aryl oder -Aralkyl, -O(C₁-C₁₄-Alkyl, -Aryl oder -Aralkyl), -OCO(C₁-C₁₄-Alkyl, -Aryl oder -Aralkyl), -O-CO-O(C₁-C₁₄-Alkyl, -Aryl oder -Aralkyl), -OSO₂(C₁-C₁₄-Alkyl, -Aryl oder -Aralkyl), -H, -Cl, -F, -OH, -R, -RK stehen,
- R⁴: = C₁-C₁₄-Alkyl, -Aryl oder -Aralkyl,
- A: = 0 - 20, bevorzugt 0 -15, besonders bevorzugt 0 - 8,
- B: = 2 - 300, bevorzugt 10 - 200, besonders bevorzugt 15 - 100 und
- C: = 0 - 20, bevorzugt 0 - 15, besonders bevorzugt 0 - 8 ist;
wobei für C = 0 gilt, dass R³ = R und/oder R² = R ist.

Wenn die Einheit -[SiR⁴(Z-R)]-O- vorhanden ist, d. h. C mindestens 1 ist, so ist es möglich, dass R² und R³ verschieden von R sind.

Verbindungen der allgemeinen Formel (I), bei welchen A mindestens 1 ist, werden vorteilhaft in solchen Systemen eingesetzt, die einer Verträglichkeitsanpassung bedürfen.

Bei den der oben angegebenen Strukturformel entsprechenden Copolymeren kann es sich um statistische Copolymere, alternierende Copolymere oder um Blockcopolymere handeln. Auch kann durch die Abfolge der Seitenketten entlang dem Silikonrückgrat ein Gradient gebildet werden. Das heißt, die A Einheiten der Formel -[SiR⁴(Z-RK)]-O-, die B Einheiten -Si(R°)₂-O- und die C Einheiten -[SiR⁴(Z-R)]-O-können in der Polysiloxankette in beliebiger Reihenfolge angeordnet sein.

Die erfindungsgemäßen kettenförmigen polyhydroxyfunktionellen Polysiloxane bestehen, wie aus der Struktur der Formel (I) und den entsprechenden Definitionen für A, B und C gefolgert werden kann, aus 4 bis 342 Siloxaneinheiten. Vorzugsweise bestehen die erfndungsgemäßen kettenförmigen polyhydroxyfunktionellen Polysiloxane aus 10 bis 100 Siloxaneinheiten, bevorzugterweise aus 20 bis 80 Siloxaneinheiten, besonders bevorzugterweise aus 30 bis 70 Siloxaneinheiten.

Um den polyhydroxyfunktionellen verzweigten Polyetheralkylrest -Z-R in das Si-H funktionelle Polysiloxan einzubringen, bedient man sich vorzugsweise polyhydroxyfunktioneller dendritischer Allylpolyether, die sich durch ringöffnende Polymerisation von Hydroxyoxetanen, das heißt Verbindungen mit einer Oxetangruppe und mindestens einer Hydroxygruppe oder Hydroxyalkylgruppe, mit einer oder mehr Hydroxygruppen tragenden allylischen Startverbindungen herstellen lassen. Diese verzweigten polyhydroxyfunktionellen Allylpolyether können durch Addition in das Polysiloxan eingeführt werden.

Der polyhydroxyfunktionelle verzweigte Polyetheralkylrest -Z-R kann jedoch auch durch Kondensation eines dendritischen polyhydroxyfunktionellen Hydroxyalkylpolyethers in das Polysiloxan eingeführt werden. Der Hydroxyalkylpolyether kann durch ringöffnende Polymerisation von Hydroxyoxetanen mit einer oder mehr Hydroxygruppen tragenden allylischen Startverbindungen und nachfolgende Addition von Wasser hergestellt werden ist.

Diese allylischen Startverbindungen können, wie zum Beispiel Allylalkohol, in Bezug auf die Hydroxygruppen monofunktionell sein. Bevorzugt werden di-, tri- oder polyfunktionelle Startverbindungen eingesetzt, die im Hinblick auf die Polydispersität und einige physikalische Eigenschaften Vorteile zeigen. Die Hydroxygruppen der dioder polyfunktionellen allylischen Startverbindung sind vorzugsweise verethert mit einem Di-, Tri- oder Polyol, einem Dihydroxy-, Trihydroxy- oder Polyhydroxy-Ester oder -Polyester oder einem Dihydroxy-, Trihydroxy- oder Polyhydroxy-Ether oder Polyether, wie zum Beispiel einem 5,5-Dihydroxyalkyl-1,3-dioxan, einem 5,5-Di(hydroxyalkoxy)-1,3-dioxan, einem 5,5-Di(hydroxyalkoxyalkyl)-1,3-dioxan, einem 2-Alkyl-1,3-propandiol, einem 2,2-Dialkyl-1,3-propandiol, einem 2-Hydroxy-1,3-propandiol, einem 2,2-Dihydroxy-1,3-propandiol, einem 2-Hydroxy-2-alkyl-1,3-propandiol, einem 2-Hydroxyalkyl-2-alkyl-1,3-propandiol, einem 2,2-Di(hydroxyalkyl)-1,3-propandiol, einem 2-Hydroxyalkoxy-2-alkyl-1,3-propandiol, einem 2,2-Di(hydroxyalkoxy)-1,3-propandiol, einem 2-Hydroxyalkoxyalkyl-2-alkyl-1,3-propandiol oder einem 2,2-Di(hydroxyalkoxyalkyl)-1,3-propandiol.

Bevorzugte Ausführungsformen der genannten di- oder polyfunktionellen allylischen Startverbindung sind verethert mit Dimeren, Trimeren oder Polymeren von 5,5-Dihydroxyalkyl-1,3-dioxanen, 5,5-Di(hydroxyalkoxy)-1,3-dioxanen, 5,5-Di(hydroxy-alkoxyalkyl)-1,3-dioxanen, 2-Alkyl-1,3-propandiolen, 2,2-Dialkyl-1,3-propandiolen, 2-Hydroxy-1,3-propandiolen, 2,2-Dihydroxy-1,3-propandiolen, 2-Hydroxy-2-alkyl-1,3-propandiolen, 2-Hydroxyalkyl-2-alkyl-1,3-propandiolen, 2,2-Di(hydroxyalkyl)-1,3-propandiolen, 2-Hydroxyalkoxy-2-alkyl-1,3-propandiolen, 2,2-Di(hydroxyalkoxy)-1,3-propandiolen, 2-Hydroxyalkoxyalkyl-2-alkyl-1,3-propandiolen und 2,2-Di(hydroxy-alkoxyalkyl)-1,3-propandiolen.

Bei den genannten Alkylresten handelt es sich vorzugsweise um lineare oder verzweigte C₁-C₂₄-, wie zum Beispiel C₁-C₁₂- oder C₁-C₈-, -Alkyle oder -Alkenyle Besonders bevorzugt als Alkylreste sind Methyl- und Ethylreste. Der Ausdruck "Alkoxy" steht vorzugsweise für Methoxy, Ethoxy, Propoxy, Butoxy, Phenylethoxy und umfasst bis zu 20 Alkoxyeinheiten oder eine Kombination von zwei oder mehr Alkoxy-Einheiten.

Weiter bevorzugte Ausführungsformen der allylischen Startverbindung mit mindestens zwei Hydroxylgruppen umfassen Monoallylether oder Monomethallylether des Glycerins, des Trimethylolethans und Trimethylolpropans, Monoallyl-, Diallyl-, Mono (methallyl)- oder Di(methallyl)-Ether des Di(trimethylol)ethans, Di(trimethylol)propans und Pentaerythritol sowie von 1,Ω-Diolen, wie zum Beispiel Mono-, Di-, Tri- und Polyethylenglykolen, Mono-, Di-, Tri- und Polypropylenglykolen, 1,4-Butandiol, 1,5-Pentandiol, 1,6-Hexandiol, 1,6-Cyclohexandimethanol und deren entsprechend Alkyl-, Alkylalkoxy- und Alkoxyalkyl-substituierten Analoga sowie deren Derivate. Die Bezeichnungen "Alkyl" and "Alkoxy" entsprechen hier den zuvor genannten Definitionen.

Besonders bevorzugt ist die mindestens zwei Hydroxygruppen aufweisende allylische Startverbindung abgeleitet von einer Verbindung aus der Gruppe bestehend aus 5,5-Dihydroxymethyl-1,3-dioxan, 2-Methyl-1,3-propandiol, 2-Methyl-2-ethyl-1,3-propandiol, 2-Ethyl-2-butyl-1,3-propandiol, Neopentylglykol, Dimethylolpropan, Glycerin, Trimethylolethan, Trimethylolpropan, Diglycerin, Di(trimethylolethan), Di(trimethylolpropan), Pentaerythritol, Di(pentaerythritol), Anhydroenneaheptitol, Sorbitol and Mannitol.

Besonders bevorzugt werden für die Polymerisation der dendritischen allylischen Polyether allylische Startverbindungen mit zwei Hydroxygruppen, wie beispielsweise Trimethylolpropanmonoallylether oder Glycerinmonoallylether, verwendet.

An derartigen allylischen Startverbindungen erfolgt die ringöffnende kationische Polymerisation mit Hydroxyoxetanen. Diese können Alkyl- oder Hydroxyalkylsubstituiert sein. Vorzugsweise handelt es sich bei den erfindungsgemäß verwendeten Hydroxyoxetanen um mindestens ein 3-Alkyl-3-(hydroxyalkyl)oxetan, ein 3,3-Di(hydroxyalkyl)oxetan, ein 3-Alkyl-3-(hydroxyalkoxy)oxetan, ein 3-Alkyl-3-(hydroxyalkoxyalkyl)oxetan oder ein Dimer, Trimer oder Polymer eines 3-Alkyl-3-(hydroxyalkyl)oxetans, eines 3,3-Di(hydroxyalkyl)oxetans, eines 3-Alkyl-3-(hydroxy-alkoxy)oxetans oder eines 3-Alkyl-3-(hydroxyalkoxyalkyl)oxetans. "Alkyl" steht hier vorzugsweise für lineare oder verzweigte C₁-C₂₄-, wie zum Beispiel C₁-C₁₂ oder C,-C₈-, -Alkyle oder -Alkenyle. Besonders bevorzugt steht der Ausdruck "Alkyl" für Methyl und Ethyl. Der Ausdruck "Alkoxy" steht vorzugsweise für Methoxy, Ethoxy, Propoxy, Butoxy, Phenylethoxy und umfasst bis zu 20 Alkoxyeinheiten oder eine Kombination von zwei oder mehr Alkoxy-Einheiten.

Besonders bevorzugt wird als Hydroxyoxetan mindestens ein Hydroxyoxetan ausgewählt aus der Gruppe bestehend aus 3-Methyl-3-(hydroxymethyl)oxetan, 3-Ethyl-3-(hydroxymethyl)oxetan, 3,3-Di(hydroxymethyl)oxetan (Trimethylolpropanoxetan) verwendet. Es können auch Mischungen dieser Verbindungen eingesetzt werden.

Weitere Details zu Reaktionen, Reaktanten und Verfahrensweisen sind unter anderem in WO 02/40572 beschrieben.

Die polyhydroxyfunktionellen dendritischen Allylverbindungen weisen mindestens eine verzweigende Generation, bevorzugt mindestens zwei verzweigende Generationen auf. Der Ausdruck "Generation" wird, wie in der WO 02/40572, im vorliegenden Fall auch zur Bezeichnung von pseudo-Generationen verwendet. Die Polydispersität der dendritischen Allylverbindungen beträgt bevorzugt < 2,8, besonders bevorzugt < 1,7.

Die folgende Formel (II) zeigt ein bevorzugt erhaltenes dendrimerartiges Reaktionsprodukt, das aus Trimethylolpropanmonoallylether und Trimethylolpropanoxetan in zweiter Generation erhalten werden kann. Wie aus der Formel zu ersehen, wird ein Dendrimer zweiter pseudo-Generation gebildet.

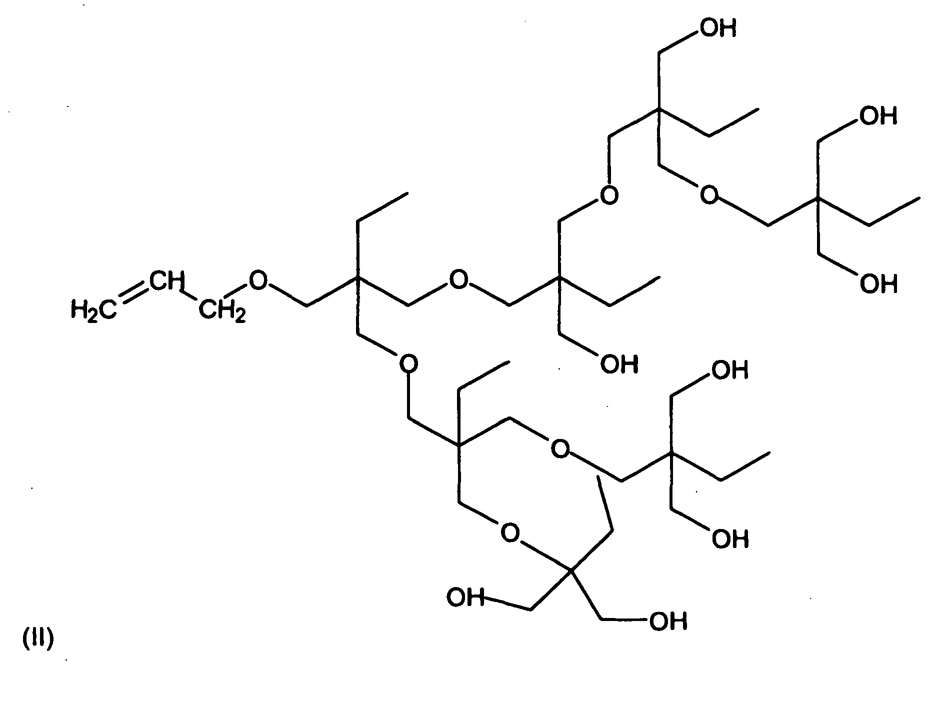

Die polyhydroxyfunktionellen Polysiloxane können durch Umsetzung mindestens einer allylischen Startverbindung mit mindestens einem Oxetan und nachfolgende Addition an das Si-H-funktionelle Alkyl-Polysiloxan hergestellt werden. Eine Synthese der polyhydroxyfunktionellen Polysiloxane kann jedoch auch durch Addition der mindestens einen allylischen Startverbindung an das Si-H-funktionelle Alkyl-Polysiloxan und nachfolgende Umsetzung mit mindestens einem Oxetan erfolgen. Bevorzugt ist eine Umsetzung der mindestens einen allylischen Startverbindung mit mindestens einem Oxetan und nachfolgende Addition an das Si-H-funktionelle Alkyl-Polysiloxan.

Die polyhydroxyfunktionellen Polysiloxane können auch durch Umsetzung einer Startverbindung, die anstelle des Allylrestes einen entsprechenden Hydroxyalkylrest trägt, mit mindestens einem Oxetan und nachfolgender Kondensation mit dem Si-H-funktionellen Alkyl-Polysiloxan hergestellt werden. Eine Synthese der polyhydroxy-funktionellen Polysiloxane kann jedoch auch durch Kondensation der hydroxyalkylfunktionellen Startverbindung mit dem Si-H-funktionellen Alkyl-Polysiloxan und nachfolgender Umsetzung mit dem mindestens einen Oxetan erfolgen. Möglich ist auch eine Umsetzung der allylischen Startverbindung mit mindestens einem Oxetan, gefolgt von einer Addition von Wasser an die allylische Doppelbindung, und Kondensation mit dem Si-H-funktionellen Alkyl-Polysiloxan.

Die Synthese der polyhydroxyfunktionellen Polysiloxane erfolgt vorzugsweise über eine Addition der durch Umsetzung der allylischen Startverbindung mit mindestens einem Oxetan erhaltenen Allylpolyether an das Si-H-funktionelle Alkyl-Polysiloxan.

Zur Einstellung einer besseren Verträglichkeit der aus diesen polyhydroxy-funktionellen Allylpolyethern hergestellten polyhydroxyfunktionellen Polysiloxane können die freien Hydroxygruppen der Allylpolyether bzw. der Hydroxyalkylpolyether auch vor oder nach der Hydrosilylierungsreaktion bzw. Kondensation mit dem Si-H-funktionellen Polysiloxan alkoxyliert werden. Bevorzugt werden sie ethoxyliert und/oder propoxyliert und/oder butoxyliert und/oder mit Styroloxid alkoxyliert. Dabei können Reinalkoxylate oder Mischalkoxylate hergestellt werden. Besonders bevorzugt werden die freien Hydroxygruppen der Allylpolyether bzw. der Hydroxyalkylpolyether ethoxyliert.

Weiterhin können die freien Hydroxygruppen auch abgesehen von einer Alkoxylierung auch auf andere Weise chemisch modifiziert werden. Beispielhaft zu nennen sind die Methylierung, die Acrylierung, die Acetylierung, die Veresterung und die Umsetzung zum Urethan durch eine Reaktion mit Isocyanaten. Die erwähnten chemischen Umsetzungen müssen dabei nicht vollständig erfolgen. So kann auch nur ein Teil der freien Hydroxygruppen, d.h. insbesondere mindestens eine Hydroxygruppe chemisch modifiziert sein.

Vorzugsweise wird die Modifizierung vor der Hydrosilylierungsreaktion durchgeführt. In diesem Fall kann die Modifizierung der freien Hydroxygruppen auch die nachfolgende Hydrosilylierungsreaktion positiv beeinflussen.

Über den Anteil der freien Hydroxygruppen im polyhydroxyfunktionellen Allylpolyether kann auch die Einbaufähigkeit beziehungsweise die Vernetzungsdichte des polyhydroxyfunktionellen Polysiloxans im Bindemittel gesteuert werden. Bleiben viele oder alle der ursprünglichen Hydroxyfunktionen erhalten, wird eine hohe Vernetzungsdichte erhalten, die zu einer besseren Härte des Lacksystems führen kann. Werden dagegen im Wesentlichen alle Hydroxygruppen blockiert, behält das Molekül eine gewisse Beweglichkeit und kann bei einem mehrschichtigen Lackaufbau durch die Schichten wandern, so dass die Zwischenschichthaftung nicht negativ beeinflusst wird.

Um Verträglichkeiten der polyhydroxyfunktionellen Polysiloxane mit den Beschichtungsmitteln, den polymeren Formmassen und den Thermoplasten anpassen zu können, kann es sinnvoll sein, in Kombination mit den erfindungsgemäß verwendeten polyhydroxyfunktionellen Allylverbindungen auch Allylpolyether einzusetzen, die durch die Alkoxylierung von Allylalkohol oder Monoallylethern mit einer oder mehreren Hydroxygruppen mit Alkylenoxiden, insbesondere Ethylenoxid und/oder Propylenoxid und/oder Butylenoxid und/oder Styroloxid, hergestellt werden. Diese schon seit langem bekannten Allylpolyether werden zur besseren Unterscheidung im Folgenden "unverzweigte Allylpolyether" genannt und führen zu "unverzweigten Polyetherresten" Z-RK im Polysiloxan. Dabei können sowohl Reinalkoxylate als auch Mischalkoxylate hergestellt werden. Bei Mischalkoxylaten kann die Alkoxylierung blockweise, alternierend oder statistisch sein. Auch können die Mischalkoxylate einen Verteilungsgradienten in Bezug auf die Alkoxylierung enthalten.

Die Endgruppen bzw. die Endgruppe des unverzweigten Allylpolyethers kann hydroxyfunktionell sein, oder aber, wie oben beschrieben, beispielsweise durch Methylierung oder Acetylierung, umgesetzt sein.

Vorzugsweise handelt es bei dem unverzweigten Polyetherrest RK um ein Ethylenoxid ([EO]), ein Propylenoxid ([PO]) oder ein Ethylenoxid-Propylenoxid-Copolymer der folgenden Formel (III)

(III) RK = - O - [EO]ᵥ - [PO]_{w} - R⁶

mit v = 0 - 70; bei v = 0 ist w ≥ 1;
mit w = 0 - 50; bei w = 0 ist v ≥ 1;
wobei R⁶ eine aliphatische, aromatische, araliphatische Verbindung darstellt, die auch Heteroatome enthalten kann, wie z.B. H, Alkyl, Ester, Allyl, (Meth)acryl, Urethan.

Durch unterschiedliche Anteile an ([EO]) und ([PO]) können die Eigenschaften des erfindungsgemäßen Polysiloxans beeinflusst werden. So kann speziell wegen der größeren Hydrophobie der [PO]-Einheiten im Vergleich zu den [EO]-Einheiten durch die Wahl geeigneter [EO]:[PO]-Verhältnisse die Hydrophobie des erfindungsgemäßen Polysiloxans gesteuert werden.

Bei den der oben angegebenen Strukturformel entsprechenden Copolymeren kann es sich um statistische Copolymere, alternierende Copolymere oder um Blockcopolymere handeln. Auch kann durch die Abfolge der Alkylenoxideinheiten ein Gradient gebildet werden.

Es ist möglich, nicht nur einen unverzweigten Allylpolyether einzusetzen. Zur besseren Steuerung der Verträglichkeit können auch Mischungen unterschiedlicher unverzweigter Allylpolyether eingesetzt werden.

Die Reaktionsführung kann so erfolgen, daß die unverzweigten Allylpolyether und die verzweigten Allylpolyether nacheinander an das Si-H-funktionelle Alkyl-Polysiloxan addiert werden. Die Allylpolyether können aber auch vor der Addition gemischt werden, so dass dann die Allylpolyethermischung an das Si-H-funktionelle Alkyl-Polysiloxan addiert wird.

Als unverzweigte Polyether werden auch entsprechende monohydroxyfunktionelle Polyether verstanden, die sich von Tri- und Polyolen wie z.B. Glycerin oder Fettalkoholen als Startalkoholen ableiten. Diese monohydroxyfunktionellen Polyether werden häufig durch die Ethoxylierung und/oder Propoxylierung und/oder Butoxylierung und/oder Alkoxylierung mit Styroloxid von Monoalkoholen, beispielsweise Butanol, Ethanol, Methanol, Allylalkohol, oder anderen Startalkoholen, beispielsweise Fettalkoholen, hergestellt. Sie können durch Kondensation entsprechender Verbindungen HO-Z-RK mit Silan-WasserstoffAtomen in das Polysiloxan eingebracht werden. Es können auch Mischungen unterschiedlicher monohydroxyfunktioneller Polyether eingesetzt werden.

Dabei kann das Verfahren zur Herstellung der polyhydroxyfunktionellen Polysiloxane über die Kondensation erfindungsgemäßer und gegebenenfalls monohydroxyfunktioneller Polyether und/oder die Addition erfindungsgemäßer und gegebenenfalls unverzweigter Allylpolyether einstufig (d.h. unverzweigte Hydroxyalkylpolyether im Gemisch mit verzweigten Hydroxyalkylpolyethern) oder zweistufig durchgeführt werden. Bevorzugt wird es zweistufig durchgeführt. Besonders bevorzugt wird in der ersten Stufe der beziehungsweise die monohydroxyfunktionelle unverzweigte Polyether an das Si-H-funktionelle Alkyl-Polysiloxan kondensiert. In der zweiten Stufe erfolgt dann die Addition des beziehungsweise der polyhydroxyfunktionellen Allylpolyether an das Si-H-funktionelle Alkyl-Polysiloxan.

Um Verträglichkeiten der polyhydroxyfunktionellen Polysiloxane mit den Beschichtungsmitteln, den polymeren Formmassen und den Thermoplasten anpassen zu können, kann es sinnvoll sein, in Kombination mit den erfindungsgemäß verwendeten polyhydroxyfunktionellen Allylverbindungen auch Allylpolyester einzusetzen, die durch die Veresterung von Alkoholen mit allylischer Doppelbindung (1-Alkenolen, wie z.B. 1-Hexenol, oder hydroxyfunktionelle Allylpolyethern, wie z.B. Ethylenglykolmonoallylether, Diethylglykolmonoallylether oder höhere Homologe) mit Hydroxycarbonsäuren, bzw. cyclischen Estern erhalten werden können. Bevorzugt erfolgt die Veresterung über eine ringöffnende Polymerisation mit Propiolacton, Caprolacton, Valerolacton oder Dodecalacton, sowie deren Derivaten. Besonders bevorzugt erfolgt die ringöffnende Polymerisation mit Caprolacton. Dabei können sowohl Reinpolyester als auch Mischpolyester hergestellt werden. Bei Mischpolyestern kann die Veresterung blockweise, alternierend oder statistisch sein. Auch können die Mischpolyester einen Verteilungsgradienten in Bezug auf die Veresterung enthalten.

Die Endgruppen des Allylpolyesters können hydroxyfunktionell sein, oder aber, beispielsweise durch Methylierung oder Acetylierung, umgesetzt sein.

Die gewichtsmittleren Molekulargewichte der Allylpolyester können zwischen 2 und 4000 g/mol, bevorzugt zwischen 300 und 2000 g/mol und besonders bevorzugt zwischen 400 und 1000 g/mol liegen.

Die Reaktionsführung kann so erfolgen, daß die Allylpolyester und die verzweigten Allylpolyether nacheinander an das Si-H-funktionelle Alkyl-Polysiloxan addiert werden. Die verzweigten Allylpolyether und die Allylpolyester können aber auch vor der Addition gemischt werden, so dass dann diese Mischung an das Si-H-funktionelle Alkyl-Polysiloxan addiert wird.

Um Verträglichkeiten der polyhydroxyfunktionellen Polysiloxane mit den Beschichtungsmitteln, den polymeren Formmassen und den Thermoplasten anpassen zu können, kann es sinnvoll sein, in Kombination mit den erfindungsgemäß verwendeten polyhydroxyfunktionellen Allylverbindungen auch Mischungen aus den o.g. unverzweigten Allylpolyethern und Allylpolyestern einzusetzen.

Generell können die Verträglichkeiten der polyhydroxyfunktionellen Polysiloxane auf die unterschiedlichsten Matrizes angepaßt werden. Um die polyhydroxyfunktionellen Polysiloxane beispielsweise in Polycarbonaten einzusetzen, kann man in die polyhydroxyfunktionellen Polysiloxane entsprechende Polycarbonat-Modifizierungen einbauen, wie dies z. B. in der US 6,072,011 beschrieben ist.

Besonders bevorzugt für den Einsatz in Beschichtungsmitteln, polymeren Formmassen und Thermoplasten ohne Verträglichkeitsprobleme sind Polysiloxane der allgemeinen Formel (IV) 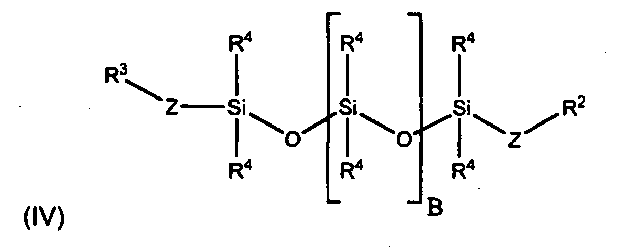 wobei
- Z: = C₁-C₁₄ Alkylen,
und wobei mindestens ein Substituent aus der Gruppe bestehend aus R² und R³ für R steht und der andere für C₁-C₁₄-Alkyl, -Aryl oder -Aralkyl, -O(C₁-C₁₄-Alkyl, -Aryl oder -Aralkyl), -OCO(C₁-C₁₄-Alkyl, -Aryl oder -Aralkyl), -O-CO-O(C₁-C₁₄- Alkyl, -Aryl oder -Aralkyl), -OSO₂(C₁-C₁₄-Alkyl, -Aryl oder -Aralkyl), -H, -Cl, -F, -OH, -R,oder -RK, wobei RK = unverzweigter Polyetherrest aus Alkylenoxid-Einheiten mit 1-6 Kohlenstoff- atomen, oder aliphatischer und/oder cycloaliphatischer und/oder aromatischer Polyesterrest mit einem gewichtsmittleren Molekulargewicht zwischen 200 und 4000 g/mol und
- R: = polyhydroxyfunktioneller verzweigter Polyetherrest,
- R⁴: = C₁-C₁₄-Alkyl, -Aryl oder -Aralkyl,
- B: = 2 - 300, bevorzugt 10 - 200, besonders bevorzugt 15 - 100 ist.

Diese Verbindungen entsprechen den in der allgemeinen Formel (I) dargestellten Verbindungen für den Fall A=0 und C=0 für den Fall, dass mindestens einer der beiden Substituenten R² oder R³ ein polyhydroxyfunktioneller verzweigter Polyetherrest R ist.

Besonders bevorzugte Verbindungen sind die Verbindungen der allgemeinen Formel (IV), für die R² = R³ = R ist. Aufgrund der endständigen polyhydroxyfunktionellen verzweigten Polyetherreste zeigen sie vielfach eine verbesserte Wirksamkeit. Sie können vorteilhaft in Beschichtungsmitteln, polymeren Formmassen und Thermoplasten eingesetzt werden, die keiner Verträglichkeitsanpassung durch Reste RK bedürfen.

Die eingesetzten Si-H-funktionellen Alkyl-Polysiloxane können auch streng monofunktionell sein, das heißt nur ein Silan-Wasserstoff-Atom aufweisen. Mit ihnen können bevorzugte Verbindungen erzeugt werden, in denen exakt eine der Gruppen R² oder R³ für einen Rest R steht. Die SiH-funktionellen Alkyl-Polysiloxane können zum Beispiel durch die folgende allgemeine Formel (V) dargestellt werden: 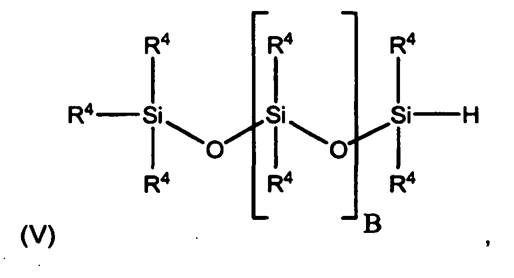 für die die oben genannten Definitionen für R⁴ und B gelten. Diese Verbindungen liefern polyhydroxyfunktionelle Polysiloxane der allgemeinen Formel (VI)

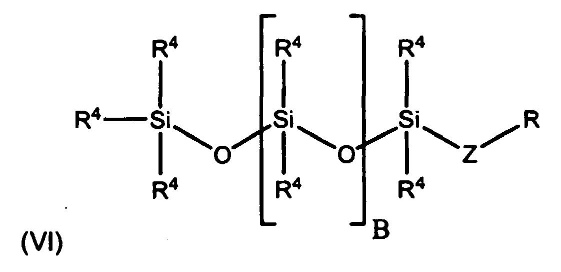

Die Synthese dieser linearen monofunktionellen Polysiloxane kann beispielsweise über eine lebende anionische Polymerisation cyclischer Polysiloxane erfolgen. Dieses Verfahren ist unter anderem bei T. Suzuki in Polymer, 30 (1989) 333 beschrieben. Die Reaktion wird beispielhaft in folgendem Reaktionsschema dargestellt:

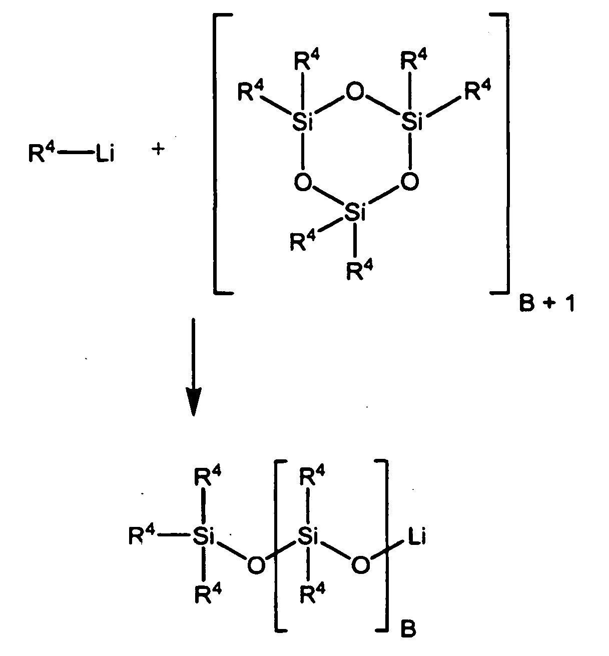

Die SiH(R⁴)₂-Funktionalisierung der Endgruppe kann mit funktionellen Chlorsilanen, beispielsweise Dialkylchlorsilan, analog dem folgenden Reaktionsschema nach dem Durchschnittsfachmann bekanntem Verfahren erfolgen.

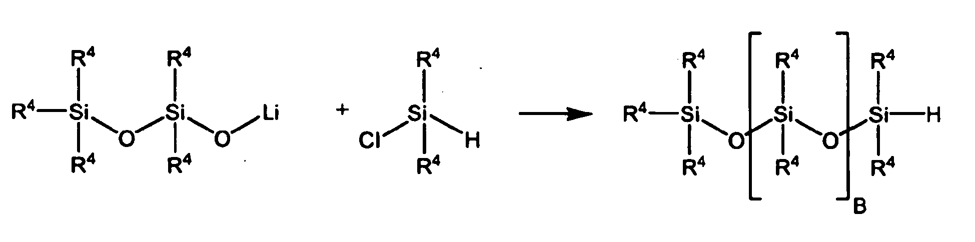

Eine weitere Möglichkeit zur Herstellung linearer, monofunktioneller Polysiloxane ist die Äquilibrierung cyclischer und offenkettiger Polydialkylsiloxane mit endständig Si-H-difunktionellen Polydialkylsiloxanen, wie bei Noll (Chemie und Technologie der Silicone, VCH, Weinhelm, 1984) beschrieben. Aus statistischen Gründen besteht das Reaktionsprodukt aus einer Mischung cyclischer, difunktioneller, monofunktioneller und nicht funktioneller Siloxane. Der Anteil an linearen Siloxanen im Reaktionsgemisch kann durch eine destillatlve Entfernung der niederen Zyklen erhöht werden. Innerhalb der linearen Polyslloxane sollte der Anteil SiH(R⁴)₂-monofunktioneller Polyslloxane Im Reaktionsprodukt der Äquilibrierung möglichst hoch sein. Wenn Mischungen linearer Polysiloxane eingesetzt werden, so gilt für die Wirksamkeit der späteren erfindungsgemäßen Produkte, daß diese um so höher ist, je höher der Anteil der monofunktionellen erfindungsgemäßen Endprodukte ist. Beim Einsatz von Mischungen sollte der Anteil der monofunktionellen erfindungsgemäßen Endprodukte vorzugsweise der größte Anteil in der Mischung sein und bevorzugt mehr als 40 Gew.-% betragen. Typische an cyclischen Verunreinigungen abgereicherte Äquillibrierungsprodukte enthalten vorzugsweise weniger als 40 Gew.-% diffunktioneller und weniger als 15 Ges.-% nichtfunkdoneller linearer Polysilloxane, wobei Insbesondere letztere weniger als 5 Gew.-%, am besten überhaupt nicht, enthalten sind.

Ein Beispiel eines erfindungsgemäßen polyhydroxyfunktlonellen Polysiloxans mit endständiger Funktionalisierung aus einem Polysiloxan mit endständigen SI-H-Gruppen zeigt die folgende Formel (VII):

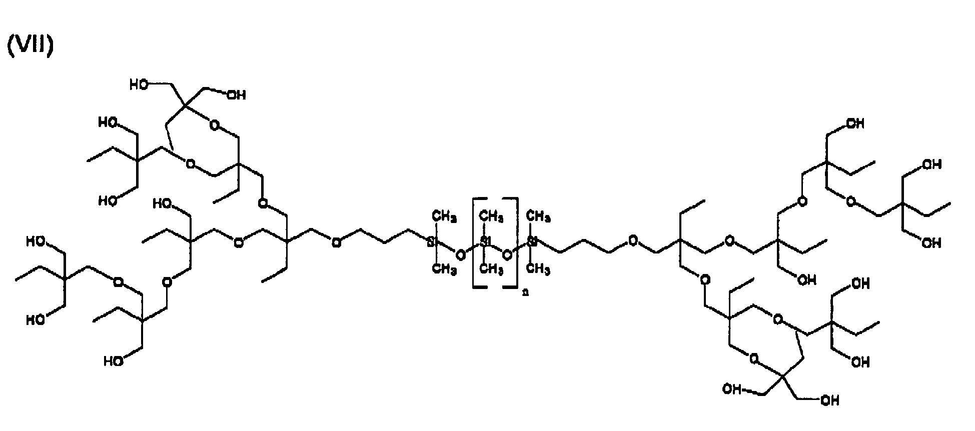

Ein Umsetzungsbeispiel eines monofunktionellen Polysiloxans mit einem dendrimerartigen Polyetherrest zeigt die folgende Formel (VIII):

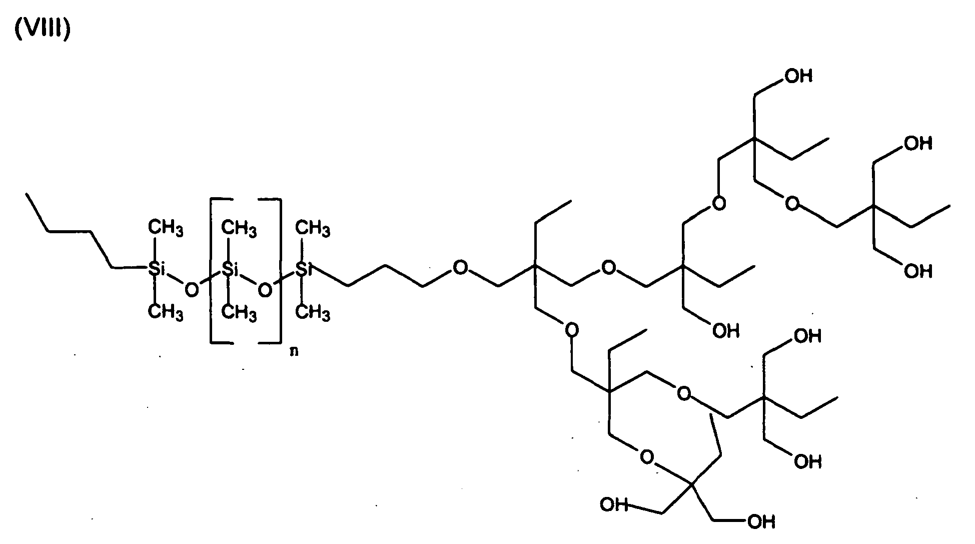

Typischerweise erfolgt die Hydrosilylierung unter den folgenden Bedingungen: Das Si-H-funktionelle Alkyl-Polysiloxan wird bei Raumtemperatur vorgelegt. Dann werden beispielsweise 25 bis 100 ppm einer Kaliumacetatlösung zugegeben, um eventuell ablaufende Nebenreaktionen zu unterdrücken. Abhängig von der zu erwartenden Exothermie der Reaktion wird ein Teil oder die Gesamtmenge der Allylverbindungen zugegeben. Unter einer Stickstoffatmosphäre wird dann der Reaktorinhalt auf 75°C bis 80°C erwärmt. Ein Katalysator, wie ein Übergangsmetall, beispielsweise Nickel, Nickelsalze, Iridiumsatze oder vorzugsweise ein Edelmetall der Gruppe VIII, wie beispielsweise Hexachloroplatinsäure oder cis-Diamminplatin(II)-dichlorid, wird dann zugesetzt. Durch die dann ablaufende exotherme Reaktion steigt die Temperatur. Normalerweise wird versucht, die Temperatur in einem Bereich von 90°C bis 120°C zu halten. Falls ein Teil der Allylverbindungen noch zudosiert werden muß, erfolgt die Zugabe in der Art, daß die Temperatur von 90°C bis 120°C nicht überschritten wird, aber auch eine Temperatur von 70°C nicht unterschritten wird. Nach vollständiger Zugabe wird die Temperatur noch für einige Zeit bei 90°C bis 120°C gehalten. Der Ablauf der Reaktion kann durch Infrarot-Spektroskopie auf das Verschwinden der Absorptionsbande des Siliciumhydrids (Si-H: 2150 cm⁻¹) überwacht werden.

Die erfindungsgemäßen polyhydroxyfunktionellen Polysiloxane können nachträglich noch chemisch modifiziert werden, um beispielsweise bestimmte Verträglichkeiten mit Bindemitteln einzustellen. Die Modifizierungen können eine Acetylierung, eine Methylierung, eine Umsetzung mit Monoisocyanaten, oder eine partielle Umsetzung mit Diisocyanaten. Außerdem können durch Umsetzung mit Carbonsäureanhydriden, beispielsweise mit Phthalsäureanhydrid oder Bernsteinsäureanhydrid, Säurefunktionen eingebaut werden. Dabei können die Hydroxygruppen partiell oder vollständig umgesetzt werden. Durch Umsetzung mit entsprechenden ungesättigten Anhydriden, beispielsweise Maleinsäureanhydrid, kann neben einer Carboxygruppe auch eine oder mehrere reaktive Doppelbindung in das Molekül eingebaut werden. Dabei können die Hydroxyfunktionen auch mit strukturell verschiedenen Anhydriden umgesetzt werden. Die Carboxygruppen können, um eine bessere Wasserlöslichkeit zu erzielen, auch noch mit Alkanolaminen versalzt werden. Weiterhin können durch nachträgliche Acrylierung oder Methacrylierung an der Hydroxygruppen Produkte erhalten werden, die sich auch bei strahlenhärtenden Prozessen, wie UV- und Elektronenstrahlhärtung, fest in Lacksysteme einbauen lassen. Die Hydroxygruppen können auch durch ringöffnende Polymerisation mit Propiolacton, Caprolacton, Valerolacton oder Dodecalacton, sowie deren Derivaten verestert werden. Besonders bevorzugt erfolgt die ringöffnende Polymerisation mit Caprolacton. Dabei können sowohl Reinpolyester als auch Mischpolyester hergestellt werden. Bei Mischpolyestern kann die Veresterung blockweise, alternierend oder statistisch sein. Auch können die Mischpolyester einen Verteilungsgradienten in Bezug auf die Veresterung enthalten.

Gegenstand der Erfindung sind weiterhin die erfindungsgemäßen polyhydroxyfunktionelle Polysiloxane enthaltenden Beschichtungsmittel, polymeren Formmassen und Thermoplaste.

Die mit den erfindungsgemäßen polyhydroxyfunktionellen Polysiloxanen hergestellten Beschichtungsmittel, polymeren Formmassen und Thermoplaste können pigmentiert oder unpigmentiert eingesetzt werden, außerdem können die Beschichtungsmittel, polymeren Formmassen und Thermoplaste Füllstoffe wie Calciumcarbonat, Aluminiumhydroxid, verstärkende Fasern wie Glasfasern, C-Fasern und Aramidfasern enthalten. Des Weiteren können die mit den erfindungsgemäßen polyhydroxyfunktionellen Polysiloxanen hergestellten Beschichtungsmittel, polymeren Formmassen und Thermoplaste andere übliche Additive enthalten, wie beispielsweise Netz- und Dispergiermittel, Lichtschutzmittel, Alterungsschutzmittel und dergleichen.

Die mit den erfindungsgemäßen polyhydroxyfunktionellen Polysiloxanen hergestellten Beschichtungsmittel enthalten bevorzugt mindestens ein Bindemittel. Bei den mit den erfindungsgemäßen polyhydroxyfunktionellen Polysiloxanen hergestellten Beschichtungsmitteln handelt es sich bevorzugt um Beschichtungsmittel zur Herstellung von Antigraffitibeschichtungen, Trennbeschichtungen, selbstreinigenden Fassadenbeschichtungen, eisabweisenden Beschichtungen (beispielsweise für Flugzeuge), Beschichtungen für Autofelgen, schmutzabweisende Maschinen- und Gerätebeschichtungen, Bootsbeschichtungen (Antifoulingbeschichtungen), sowie schmutzabweisenden Möbel- und Trennpapierbeschichtungen. Bedingt durch die sehr gute Verträglichkeit der polyhydroxyfunktionellen Polysiloxane sind diese auch hervorragend zur Herstellung transparenter Beschichtungen geeignet.

Die erfindungsgemäßen Beschichtungsmittel und polymeren Formmassen enthalten die polyhydroxyfunktionellen Polysiloxane als Additiv in Mengen von 0,1 bis 10 Gew.-%, bevorzugt von 0,5 bis 7,5 Gew.-%, ganz besonders bevorzugt von 1 bis 5 Gew.-% bezogen auf den Feststoffgehalt des Beschichtungsmittels oder der polymeren Formmasse. Die polyhydroxyfunktionellen Polysiloxane werden bevorzugt als Lösung oder als Emulsionen den erfindungsgemäßen Beschichtungsmitteln oder polymeren Formmassen zugesetzt.

Die erfindungsgemäßen Thermoplaste enthalten die polyhydroxyfunktionellen Polysiloxane als Additiv in Mengen von 0,1 bis 5 Gew.-%, bevorzugt von 0,2 bis 2,0 Gew.-%, ganz besonders bevorzugt von 0,5 bis 1 Gew.-% bezogen auf den Feststoffgehalt des Thermoplasts. Die polyhydroxyfunktionellen Polysiloxane werden bevorzugt als Feststoff den erfindungsgemäßen Thermoplasten zugesetzt.

Die mit den erfindungsgemäßen polyhydroxyfunktionellen Polysiloxanen hergestellten Beschichtungsmittel können auf einer Vielzahl von Substraten aufgebracht werden, wie beispielsweise Holz, Papier, Glas, Keramik, Putz, Beton und Metall. Die Beschichtungen können auch im Mehrschichtverfahren auf Grundierungen, Füller oder Basislacken aufgebracht werden. Die Aushärtung der Beschichtungsmittel ist abhängig von der jeweiligen Art der Vernetzung und kann im weiten Temperaturbereich von beispielsweise -10°C bis 250°C erfolgen. Überraschenderweise zeigen mit den erfindungsgemäßen polyhydroxyfunktionellen Polysiloxanen hergestellten Beschichtungsmittel auch bei Aushärtung bei Raumtemperatur sehr gute anti-adhäsive schmutzabweisende Eigenschaften. Weiterhin weisen die mit den erfindungsgemäßen polyhydroxyfunktionellen Polysiloxanen hergestellten Beschichtungsmittel gute antistatische Eigenschaften auf.

Auf Grund der außergewöhnlich guten Anti-Adhäsion der erfindungsgemäßen Beschichtungsmittel werden auch ölhaltige Substanzen wie beispielsweise Mineralöle, pflanzliche Öle, oder ölige Zubereitungen abgewiesen, so daß eine Restentleerung von entsprechenden ölhaltigen Gebinden möglich wird. Die so additivierten Beschichtungsmittel eignen sich demzufolge auch für Doseninnenbeschichtungen und Faßinnenlackierungen. Aufgrund der antistatischer Eigenschaften der entsprechend additivierten Beschichtungsmittel eignet sich ihr Einsatz immer dann, wenn nachteilige Effekte, die durch elektrostatische Aufladung entstehen, vermieden werden sollen.

Bei den mit den erfindungsgemäßen polyhydroxyfunktionellen Polysiloxanen hergestellten polymeren Formmassen handelt es sich bevorzugt um Lackharze, Alkydharze, Polyesterharze, Epoxidharze, Polyurethanharze, ungesättigte Polyesterharze, Vinylesterharze, Polyethylen, Polypropylen, Polyamide, Polyethylentherephthalat, PVC, Polystyrol, Polyacrylnitril, Polybutadien, Polyvinylchlorid oder Mischungen aus diesen Polymeren.

Bei den mit den erfindungsgemäßen polyhydroxyfunktionellen Polysiloxanen hergestellten Thermoplasten handelt es sich um Poly(meth)acrylate, Polyacrylnitril, Polystyrol, styrolische Kunststoffe (z.B. ABS, SEBS, SBS), Polyester, Polyvinylester, Polycarbonate, Polyethylenterephthalat, Polybutylenterephthalat, Polyamide, thermoplastische Polyurethane (TPU), Polyvinylchlorid, Polyoxymethylen, Polyethylen, oder Polypropylen. Die Thermoplaste können gefüllt und/oder pigmentiert sein. Unter den Begriff "Thermoplaste" im Sinne der Erfindung fallen auch Mischungen (Blends) verschiedenartiger Thermoplaste. Bei den Thermoplasten kann es sich beispielsweise auch um dem Durchschnittsfachmann bekannte verspinnfähige thermoplastische Fasern handeln, wie beispielsweise Polyester- oder Polyamidfasern.

Die folgenden Beispiele erläutern die Erfindung, ohne beschränkend zu wirken:

### Beispiel 1

Umsetzung eines Methyl-Wasserstoff-Siloxans mit der mittleren Durchschnittsformel M^{H}D₆₆M^{H} und Allylpolyether 1.

In einem 250-ml-3-Halskolben mit Rührer, Thermometer, Rückflußkühler werden bei Raumtemperatur 91,0 g eines Methyl-Wasserstoff-Siloxans mit der mittleren Durchschnittsformel M^{H}D₆₆M^{H} und 39,13 g Allylpolyether 1 vorgelegt und unter Stickstoffatmosphäre auf 80°C erwärmt. Bei Erreichen dieser Temperatur werden 3 mg Cisplatin zugegeben. Durch die bei der Umsetzung frei werdende Wärmemenge erhöht sich die Temperatur auf 105°C. Nach 60 Minuten bei 105°C wird die Temperatur für zwei Stunden auf 120°C erhöht. Eine gasvolumetrische Bestimmung der verbleibenden Si-H-Gruppen ergibt eine vollständige Umsetzung. Man erhält ein farbloses, leicht trübes, pastöses Produkt.

### Beispiel 2

Umsetzung eines Methyl-Wasserstoff-Siloxans mit der mittleren Durchschnittsformel M^{H}D₂₈M^{H} und Allylpolyether 2.

In einem 250-ml-3-Halskolben mit Rührer, Thermometer, Rückflußkühler werden bei Raumtemperatur 77,0 g eines Methyl-Wasserstoff-Siloxans mit der mittleren Durchschnittsformel M^{H}D₂₈M^{H} und 36,95 g Allylpolyether 2 vorgelegt und unter Stickstoffatmosphäre auf 80°C erwärmt. Bei Erreichen dieser Temperatur werden 3 mg Cisplatin zugegeben. Durch die bei der Umsetzung frei werdende Wärmemenge erhöht sich die Temperatur auf 112°C. Innerhalb von 30 Minuten wird die Temperatur auf 115°C erhöht und zwei Stunden gehalten. Eine gasvolumetrische Bestimmung der verbleibenden Si-H-Gruppen ergibt eine vollständige Umsetzung. Man erhält ein farbloses, leicht trübes, pastöses Produkt.

### Beispiel 3

Umsetzung eines Methyl-Wasserstoff-Siloxans mit der mittleren Durchschnittsformel M^{H}D₆₆D^{H}₂M^{H} und Allylpolyether 1 und Allylpolyether K1.

In einem 250-ml-3-Halskolben mit Rührer, Thermometer, Rückflußkühler werden bei Raumtemperatur 49,36 g eines Methyl-Wasserstoff-Siloxans mit der mittleren Durchschnittsformel M^{H}D₆₆D^{H}₂M^{H}, 10,92 g Allylpolyether K1 und 19,72 g Allylpolyether 1 vorgelegt und unter Stickstoffatmosphäre auf 80°C erwärmt. Bei Erreichen dieser Temperatur wird ca. 1 mg Cisplatin zugegeben. Die Temperatur wird auf 120°C erhöht und der Ansatz 150 Minuten bei diesen Bedingungen gehalten. Eine gasvolumetrische Bestimmung der verbleibenden Si-H-Gruppe ergibt einen Umsetzungsgrad von >99%. Man erhält ein hellbraunes, fast klares, hochviskoses Produkt.

### Beispiel 4

Umsetzung eines Methyl-Wasserstoff-Siloxans mit der mittleren Durchschnittsformel M^{H}D₆₆M^{H} und Allylpolyether 3.

In einem 250-ml-3-Halskolben mit Rührer, Thermometer, Rückflußkühler werden bei Raumtemperatur 60,00 g eines Methyl-Wasserstoff-Siloxans mit der mittleren Durchschnittsformel M^{H}D₆₆M^{H}, 50,20 g Allylpolyether 3 und 47,19 g Xylol vorgelegt und unter Stickstoffatmosphäre auf 80°C erwärmt. Bei Erreichen dieser Temperatur werden ca. 4 mg Cisplatin zugegeben. Die Temperatur steigt durch Exothermie auf 114°C. Der Ansatz wird 120 Minuten bei einer Temperatur von 110°C gehalten. Eine gasvolumetrische Bestimmung der verbleibenden Si-H-Gruppe ergibt nach Ablauf dieser Zeit eine vollständige Umsetzung. In der nachfolgenden Destillation werden in einem Vakuum von etwa 20 mbar bei 130°C in einer Stunde alle flüchtigen Bestandteile abdestilliert. Man erhält ein hellbraunes, fast klares, hochviskoses Produkt.

### Beispiel 5

Umsetzung eines Methyl-Wasserstoff-Siloxans mit der mittleren Durchschnittsformel M^{H}D₄₈D^{H}₂M^{H} und Allylpolyether 1 und Allylpolyether K2.

In einem 250-ml-3-Halskolben mit Rührer, Thermometer, Rückflußkühler werden bei Raumtemperatur 39,53 g eines Methyl-Wasserstoff-Siloxans mit der mittleren Durchschnittsformel M^{H}D₄₈D^{H}₂M^{H}, 19,9 g Allylpolyether K1, 20,57 g Allylpolyether 1 und 31,12 g Xylol vorgelegt und unter Stickstoffatmosphäre auf 80°C erwärmt. Bei Erreichen dieser Temperatur werden ca. 5 mg Cisplatin zugegeben. Die Temperatur wird auf 120°C erhöht und der Ansatz 240 Minuten bei diesen Bedingungen gehalten. Eine gasvolumetrische Bestimmung der verbleibenden Si-H-Gruppe ergibt einen Umsetzungsgrad von 100%. In der nachfolgenden Destillation werden in einem Vakuum von etwa 20 mbar bei 130°C in einer Stunde alle flüchtigen Bestandteile abdestilliert. Man erhält ein hellbraunes, klares, hochviskoses Produkt.

### Beispiel 6

Umsetzung eines entständig mono-Si-H-funktionellen Silikonmakromers mit der mittleren Durchschnittsformel MD₁₄M^{H} und Allylpolyether 2

In einem 250-ml-3-Halskolben mit Rührer, Thermometer, Rückflußkühler werden bei Raumtemperatur 100,0 g eines Methyl-Wasserstoff-Siloxans mit der mittleren Durchschnittsformel MD₁₄M^{H} und 49,25 g Allylpolyether 2 vorgelegt und unter Stickstoffatmosphäre auf 80°C erwärmt. Bei Erreichen dieser Temperatur werden ca. 5 mg Cisplatin zugegeben. Die Temperatur wird auf 110°C erhöht und der Ansatz 120 Minuten bei diesen Bedingungen gehalten. Eine gasvolumetrische Bestimmung der verbleibenden Si-H-Gruppe ergibt einen Umsetzungsgrad von 100%. Man erhält ein hellbraunes, trübes, hochviskoses Produkt.

### Beispiel 7

Umsetzung eines Methyl-Wasserstoff-Siloxans mit der mittleren Durchschnittsformel MD₁₈M^{H} und Allylpolyether 1

In einem 250-ml-3-Halskolben mit Rührer, Thermometer, Rückflußkühler werden bei Raumtemperatur 71,8 g eines Methyl-Wasserstoff-Siloxans mit der mittleren Durchschnittsformel MD₁₈M^{H}, 54,74 g Allylpolyether 1 und 23,46 g Xylol vorgelegt und unter Stickstoffatmosphäre auf 80°C erwärmt. Bei Erreichen dieser Temperatur werden ca. 5 mg Cisplatin zugegeben. Die Temperatur wird auf 110°C erhöht und der Ansatz 120 Minuten bei diesen Bedingungen gehalten. Eine gasvolumetrische Bestimmung der verbleibenden Si-H-Gruppe ergibt einen Umsetzungsgrad von 100%. Man erhält ein hellbraunes, trübes, hochviskoses Produkt.

### Beispiel 8

Umsetzung eines Methyl-Wasserstoff-Siloxans mit der mittleren Durchschnittsformel M^{H}D₄₈D^{H}₂M^{H} und Allylpolyether 1 und Allylpolyester 1.

In einem 250-ml-3-Halskolben mit Rührer, Thermometer, Rückflußkühler werden bei Raumtemperatur 70,40 g eines Methyl-Wasserstoff-Siloxans mit der mittleren Durchschnittsformel M^{H}D₄₈D^{H}₂M^{H}, 36,64 g Allylpolyether 1, 28,26 g Allylpolyester und 15,19 g Xylol vorgelegt und unter Stickstoffatmosphäre auf 80°C erwärmt. Bei Erreichen dieser Temperatur werden ca. 5 mg Cisplatin zugegeben. Die Temperatur wird auf 110°C erhöht und der Ansatz 150 Minuten bei diesen Bedingungen gehalten. Eine gasvolumetrische Bestimmung der verbleibenden Si-H-Gruppe ergibt einen Umsetzungsgrad von 100%. In der nachfolgenden Destillation werden in einem Vakuum von etwa 20 mbar bei 130°C in einer Stunde alle flüchtigen Bestandteile abdestilliert. Man erhält ein hellbraunes, leicht trübes, hochviskoses Produkt.

### Legende:

Für die oben angegebenen Methyl-Wasserstoff-Siloxane bestimmen sich die Bedeutungen der angeführten Abkürzungen wie folgt:
M = -O_{0,5}Si(CH₃)₃
M^{H} = -O_{0,5}SiH(CH₃)₂
D = -O₀,₅Si(CH₃)₂O_{0,5}-
D^{H} = -O_{0,5}SiH(CH₃)O_{0,5}-

Weiterhin verwendete Abkürzungen:
Allylpolyether 1 =
   Allylpolyether mit theoretisch 8 OH-Gruppen aus der Umsetzung von Trimethylolpropanmonoallylether mit Trimethylolpropanoxetan im Verhältnis 1:6.
   OH-Zahl = 517 mg KOH/g
   Iodzahl = 29,9 g I₂/100g
   Molekulargewicht Mw = 2094 g/mol (gemessen in THF)
   Polydispersität 1,3
Allylpolyether 2 =
   Allylpolyether mit theoretisch 4 OH-Gruppen aus der Umsetzung von Trimethylolpropanmonoallylether mit Trimethylolpropanoxetan im Verhältnis 1:2.
   Iodzahl = 63,3 g I₂/100g
Allylpolyether 3 =
   Allylpolyetherethoxylat mit theoretisch 8 OH-Gruppen aus der Umsetzung Trimethyloipropanmonoallylether mit Trimethyloipropanoxetan im Verhältnis 1:6 und anschließender Ethoxylierung mit ca. 18 mol Ethylenoxid.
   OH-Zahl = 264 mg KOH/g
   lodzahl = 15,2 g I₂/100g
Allylpolyether K1 =
   Unverzweigter Allylpolyether, Allylalkohol-gestarteter Ethylenoxid-Polyether, Molekulargewicht ca. 450 g/mol
   lodzahl = 54,3 g l/100 g
Allylpolyether K2 =
   Unverzweigter Allylpolyether, Allylalkohol-gestarteter Ethylenoxid-Propylenoxid-Polyether mit 75 mol-% Ethylenoxid und 25 mol-% Propylenoxid,
   Molekulargewicht ca. 750 g/mol
   lodzahl = 30,5 g I/100 g
Allylpolyester 1 =
   Hexenol-gestarteten Caprolacton-Polyester mit durchschnittlich 5 mol Caprolacton. (JZ= 37,3 g I₂/100g)
Cisplatin = cis-Diamminplatin(II)-dichlorid

### Anwendungstechnische Prüfungen der erfindungsgemäßen polyhydroxy-funktionellen Polysiloxane:

Die anwendungstechnische Prüfung der erfindungsgemäßen polyhydroxy-funktionellen Polysiloxane erfolgte in mehreren Lacksystemen.

### Wäßriges 2-Komponenten System auf Basis Bayhydrol VP LS 2235/Bayhydur 3100

| Komponente 1 (Stammlack): | |
|---|---|
| Bayhydrol VP LS 2235¹⁾ | 70,90 |
| BYK-011²⁾ | 1,40 |
| Wasser | 1,10 |

Die Mischung wird durch Rühren homogenisiert.

| Komponente 2 (Härter): | |
|---|---|
| Bayhydur 3100 ³⁾ | 22,00 |
| Dowanol PMA | 4,60 |

Die Mischung wird durch Rühren homogenisiert.
1) Polyacrylat-Dispersion, Bayer Material Science AG, D-Leverkusen
2) Entschäumer, BYK-Chemie GmbH, D-Wesel
3) Isocyanat-basierte Härterkomponente, Bayer Material Science AG, D-Leverkusen

Stammlack und Härterlösung werden unabhängig voneinander hergestellt. Die erfindungsgemäßen Additive und die Vergleichsprodukte werden in den Stammlack in einer Konzentration von 1 Gew.-% Wirksubstanz bezogen auf den Gesamtlack eingerührt.

Kurz vor der Applikation werden Stammlack und Härterlösung im Verhältnis 100:36,2 gemischt. Die Viskosität wird durch Zugabe von Wasser auf eine Auslaufzeit von 30 Sekunden im DIN 4 mm Becher eingestellt.

Nach der Einarbeitung werden die additivierten Lacke in einem 100µm-Nassfilm mit einem Spiralrakel auf ein geprimertes Alublech aufgezogen. Danach werden die Bleche 60 Stunden bei Raumtemperatur getrocknet. Die getrockneten Bleche werden danach den unten angegebenen Tests unterzogen.

Wasserverdünnbares Acrylat/Melamin-Einbrennsystems auf Basis Neocryl XK101 und Cymel 303

| | |
|---|---|
| Neocryl XK 101 ⁴⁾ | 78,90 |
| Wasser | 6,20 |
| Cymel 303 ⁵⁾ | 8,30 |
| NMP | 6,20 |
| DMEA | 0,40 |

| | |
|---|---|
| ⁴⁾Acrylat-Emusion, DSM Neoresins, NL-Waalwijk ⁵⁾Vernetzer, Cytec Industries Inc., USA-West Paterson, NJ | |

Alle Komponenten werden gemischt und 10 Minuten mit einem Dissolver bei einer Umfangsgeschwindigkeit von 5 m/s homogenisiert. Die zu prüfenden Additive werden 10 Minuten mit einem Skandex-Rüttler in einer Konzentration von 1 % Wirksubstanz in den Lack eingearbeitet.

Nach der Einarbeitung werden die additivierten Lacke in einem 100µm-Nassfilm mit einem Spiralrakel auf ein geprimertes Alublech aufgezogen. Nach einer Ablüftzeit von 30 Minuten bei Raumtemperatur werden die Bleche 30 Minuten bei 130°C im Umluftofen eingebrannt.

Die erhaltenen Lackfilme werden hinsichtlich ihrer schmutz-, wasser- und ölabweisenden Wirkung nach folgenden Kriterien beurteilt:

### Edding-Test:

Es wird mit einem Permanent-Marker der Type "Edding 400" die Lackoberfläche beschriftet und visuell beurteilt, ob die Oberfläche beschreibbar ist. Es wird beurteilt, ob die Tinte auf der Oberfläche spreitet oder sich zusammenzieht. Nach dem Trocknen der Tinte wird versucht, diese mit einem trockene Tuch abzuwischen.

### Bewertung: 1 - 5

1 = Tinte zieht sich zusammen, läßt sich restlos mit einem Papiertuch entfernen
5 = Tinte spreitet sehr gut auf Untergrund, läßt sich praktisch nicht entfernen

### Bitumen-Test:

Bitumen wird erhitzt, bis er so weit verflüssigt ist, dass er sich auf die Lackoberfläche aufbringen läßt. Nach Abkühlen der Masse wird visuell beurteilt, wie gut sich die Bitumenmasse von der Oberfläche wieder rückstandsfrei manuell ablösen läßt.

### Bewertung: 1 - 5:

1 = Bitumen läßt sich leicht und restlos entfernen
5 = Bitumen haftet fest auf der Oberfläche und läßt sich praktisch nicht entfernen

### Verschmutzung mit Bayferrox-Pulver:

Auf die Lackoberfläche werden 3 Löffel Bayferrox 130M, Eisenoxid-Pigment, Bayer AG, gestreut und mit dest. Wasser in 5 Spritzgängen mit Hilfe einer Spritzflasche wieder abgespült. Die möglichst rückstandsfreie Oberfläche wird visuell beurteilt.

### Bewertung: 1 - 5:

1 = Bayferrox-Pulver läßt sich rückstandslos mit Wasser abwaschen
5 = kein Reinigungseffekt beim Abspülen mit Wasser, ein großer roter Fleck verbleibt

### Wasser-Ablauftest:

Es wird ein Tropfen Wasser auf die Oberfläche gegeben. Anschließend wird die beschichtete Lackoberfläche gekippt, bis der Tropfen abläuft. Es wird visuell beurteilt, bei welchem Winkel der Tropfen abläuft und ob der Tropfen rückstandsfrei abläuft.

### Bewertung: 1 - 5:

1 = geringer Winkel genügt und der Tropfen läuft komplett ohne Nasenbildung und Rückstandströpfchen ab
5 = Lackblech muß stark geneigt werden bis der Tropfen abläuft, eventuell bleiben Wasserreste auf der Lackoberfläche zurück

### Mineralöl-Ablauftest:

Es wird ein Tropfen handelsübliches Mineralöl auf die Lackoberfläche gegeben. Anschließend wird die beschichtete Lackoberfläche gekippt, bis der Tropfen etwa 10 cm gelaufen ist. Nach Ablauf von 5 Minuten wird die Ölspur bzw. eine erneute Tropfenbildung visuell bewertet.

### Bewertung: 1 - 5:

1 = Die Ölspur bildet sich sofort in einzelne Tropfen zurück
5 = Die Ölspur bildet sich nicht zurück, sondern spreitet eventuell weiter

### Wäßriges 2-Komponenten System auf Basis Bayhydrol VP LS 2235/Bayhydur 3100:

| | Öl | Bitumen | Edding | Edding abgw. |
|---|---|---|---|---|
| Nullprobe | 5 | 5 | 5 | 5 |
| Beispiel 1 | 1 | 1 | 3 | 2 |
| Beispiel 2 | 1 | 1 | 3 | 3 |
| Beispiel 3 | 2 | 1 | 3 | 2 |
| Beispiel 4 | 2 | 1 | 1 | 1 |
| Beispiel 5 | 1 | 1 | 1 | 1 |
| Tego Protect 5100 | 1 | 1 | 4 | 2 |
| Worlee Add 720 | 3 | 3 | 5 | 5 |

Worlee Add 720: modifiziertes Phenoldimethylsiloxan zur Herstellung von wässrigen sowie lösemittelhaltigen Antigraffitibeschichtungen (Worlee-Chemie, D-Hamburg)

### Wasserverdünnbares Acrylat/Melamin-Einbrennsystems auf Basis Neocryl XK101 und Cymel 303:

| | Bayferrox | Öl | Bitumen | Edding | Edding abgw. |
|---|---|---|---|---|---|
| Nullprobe | 3 | 5 | 5 | 5 | 5 |
| Beispiel 3 | 1 | 2 | 1 | 1 | 1 |
| Beispiel 4 | 1 | 1 | 1 | 1 | 1 |
| Beispiel 6 | 1 | 1 | 1 | 1 | 1 |
| Beispiel 7 | 1 | 1 | 1 | 1 | 1 |
| Worlee Add 720 | 5 | 2 | 1 | 1 | 2 |

Worlee Add 720: modifiziertes Phenoldimethylsiloxan zur Herstellung von wässrigen sowie lösemittelhaltigen Antigraffitibeschichtungen, 50%ige Lösung in Lösemittelgemisch, (Worlee-Chemie, D-Hamburg)

### Anwendungstechnische Prüfung der erfindungsgemäßen polyhydroxy-funktionellen Polysiloxane in polymeren Formmassen

Von dem polyhydroxy-funktionellen Polysiloxan aus Beispiel 3 wird eine 50%ige Lösung in 1-Methoxy-2-propylacetat hergestellt. Diese Polysiloxanlösung wird entsprechend der nachfolgenden Tabelle zu den polymeren Formmassen A und B (=Gel-Coat Mischung A und Gel-Coat Mischung B) umgesetzt.

### Rezeptur des Gel-Coats:

| | |
|---|---|
| Palatal 400-01 | 84,75%, Polyesterharz, DSM Resins |
| Aerosil 200 | 1,25%, Pyrogene Kieselsäure, Degussa |
| Tronox R-KB-2 | 10,00%, Titandioxid, Tronox |
| Beschleuniger NL-49 P | 1,00%, Cobalt-octoat, 1 %ig, Akzo Nobel |
| Styrol | 8,00% |

Palatal 400-01, Tronox R-KB-2 und Aerosil 200 werden mit einem Dissolver fünf Minuten bei etwa 2800 Upm vorgemischt. Danach wird vor Verwendung der Beschleuniger NL49 P, das Styrol bei 900 Upm zugemischt. Bei Gel-Coat Mischung A wird zusätzlich noch die Polysiloxanlösung aus Beispiel 3 zugegeben.

### Rezeptur (in Gewichtsprozent) für die getesteten Gel-Coat-Mischungen:

| | Gel-Coat Mischung A | Gel-Coat Mischung B |
|---|---|---|
| Gel-Coat | 98,5 | 98 |
| Beschleuniger NL-49 P | 1 | 2 |
| Polysiloxanlösung aus Beispiel 3 | 0,5 | |

Die anti-adhäsiven Eigenschaften dieser Gel-Coat-Mischungen werden durch die Haftung dieser Gel-Coats auf Glasplatten bestimmt. Dazu werden zunächst Glasplatten der Größe 40 x 10 x 0,05 cm durch Abwaschen mit Ethylacetat gründlich entfettet.

Anschließend werden die Gel-Coat-Mischung A und B mit einem Rahmenrakel (750 µm Spalt) auf die Glasplatte aufgebracht. Man läßt alle Gel-Coats über Nacht bei Raumtemperatur aushärten. Nach der Aushärtung wird der Gelcoat mit Hilfe eines Teppichmesser von der Platte entfernt.

### Erlebnis

Gel-Coat-Mischung B läßt sich nicht von der Glasplatte entfernen. Die mit einem internen Trennmittel ausgerüstete Gel-Coat-Mischung A läßt sich von der ungewachsten Metallplatte leicht entfernen. Die Oberfläche der mit einem internen Trennmittel ausgerüsteten Gel-Coat-Mischung A von der ungewachsten Metallplatte ist absolut glatt und zeigt einen hohen Glanz.

### Anwendungstechnische Prüfung der erfindungsgemäßen polyhydroxy-funktionellen Polysiloxane in Thermoplasten

In je 100 g einer 10 %igen Lösung aus Polymethylmethacrylat in n-Ethylacetat wurden je 0,05 g der Produkte aus Beispiel 6 und 7 aufgelöst. Auf einer 100 x 250 mm großen Glasplatte wurde je ein 200 µm starker Film hergestellt. Nach Entfernung des Lösemittels resultierte eine Beschichtung mit einer Schichtdicke von ca. 20 µm. Als Vergleichsprobe diente eine entsprechende Beschichtung auf Glas ohne Additiv. Zur Messung des Gleitwiderstandes wurde ein elektrisches Filmaufziehgerät mit konstantem Vorschub verwendet. Auf der Halterung für das Filmaufziehgerät wurde ein Zugdruck-Kraftaufnehmer befestigt, der über einen Computer jeden Widerstand, der dem Gleitkörper entgegensteht, aufzeichnet. Der Gleitkörper wird in Zugrichtung über die zu messende Oberfläche bewegt. Als Gleitkörper wurde ein 500 g Gewichtsstein mit einer definierten Filzunterlage verwendet.

Die Beurteilung der Transparenz/Eintrübung der Beschichtung wurde rein visuell vorgenommen.

| Probe | Gleitwiderstand in Newton | Tranzparenz |
|---|---|---|
| Nullprobe ohne Additiv | 5,3 | transparent |
| Beispiel 6 | 1,5 | transparent |
| Beispiel 7 | 1,7 | transparent |
| Worlee Add 720 | 2,3 | transparent |

## Patentansprüche

1. Polyhydroxyfunktionelles Polysiloxan, **gekennzeichnet dadurch, dass** es herstellbar ist über die Addition mindestens eines verzweigten dendritischen polyhydroxyfunktionellen Allylpolyethers an ein Si-H-funktionelles Alkyl-Polysiloxan, wobei der Allylpolyether durch ringöffnende Polymerisation von Hydroxyoxetanen mit einer oder mehreren Hydroxygruppen tragenden allylischen Startverbindungen herstellbar ist.

2. Polyhydroxyfunktionelles Polysiloxan nach Anspruch 1, **dadurch gekennzeichnet, dass** es sich bei dem Alkyl-Polysiloxan um ein Methyl-Wasserstoff-Polysiloxan handelt.

3. Polyhydroxyfunktionelles Polysiloxan nach einem der Ansprüche 1 bis 2, **dadurch gekennzeichnet, dass** das Si-H-funktionelle Polysiloxan ein Kettenpolymer, ein cyclisches Polymer, ein verzweigtes Polymer oder ein vernetztes Polymer ist.

4. Polyhydroxyfunktionelles kettenförmiges Polysiloxan nach einem der Ansprüche 1 bis 3, **dadurch gekennzeichnet, dass** es sich durch die allgemeine Formel 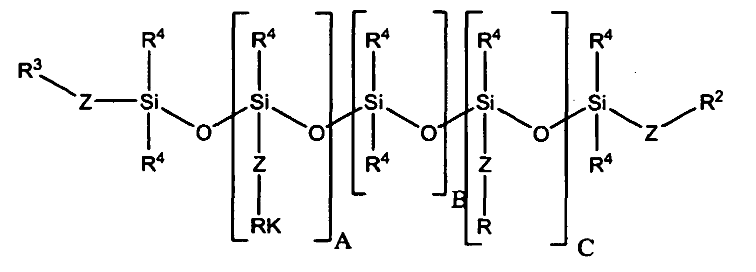 darstellen lässt, wobei gilt
Z = C₁-C₁₄-Alkylen,
RK = unverzweigter Polyetherrest aus Alkylenoxid-Einheiten mit 1-6 Kohlenstoffatomen, und/oder aliphatischer und/oder cycloaliphatischer und/oder aromatischer Polyesterrest mit einem gewichtsmittleren Molekulargewicht zwischen 200 und 4000 g/mol
R = polyhydroxyfunktioneller verzweigter Polyetherrest,
R² und R³ unabhängig voneinander für C₁-C₁₄-Alkyl, -Aryl oder -Aralkyl, -O(C₁-C₁₄-Alkyl, -Aryl oder -Aralkyl), -OCO(C₁-C₁₄-Alkyl, -Aryl oder -Aralkyl), -O-CO-O(C₁-C₁₄-Alkyl, -Aryl oder -Aralkyl), -OSO₂(C₁-C₁₄-Alkyl, -Aryl oder -Aralkyl), -H, -Cl, -F, -OH, -R, -RK stehen,
R⁴ = C₁-C₁₄-Alkyl, -Aryl oder -Aralkyl,
A = 0 - 20, bevorzugt 0 -15, besonders bevorzugt 0 - 8,
B = 2 - 300, bevorzugt 10 - 200, besonders bevorzugt 15 - 100 und
C = 0 - 20, bevorzugt 0 - 15, besonders bevorzugt 0 - 8 ist;
wobei für C = 0 gilt, dass R³ = R und/oder R² = R ist.

5. Polyhydroxyfunktionelles kettenförmiges Polysiloxan nach Anspruch 4, **dadurch gekennzeichnet, dass** es aus 10 bis 100 Siloxaneinheiten, bevorzugterweise aus 20 bis 80 Siloxaneinheiten, besonders bevorztig weise aus 30 bis 70 Siloxaneinheiten besteht.

6. Polyhydroxyfunktionelles kettenförmiges Polysiloxan nach Anspruch 4 oder 5, **dadurch gekennzeichnet, dass** der polyhydroxyfunktionelle verzweigte Polyetheralkylrest -Z-R durch Addition eines dendritischen polyhydroxy-funktionellen Allylpolyethers in das Polysiloxan eingeführt wird.

7. Polyhydroxyfunktionelles kettenförmiges Polysiloxan nach Anspruch 4 oder 5, **dadurch gekennzeichnet, dass** der polyhydroxyfunktionelle verzweigte Polyetheralkylrest -Z-R durch Kondensation eines dendritischen polyhydroxyfunktionellen Hydroxyalkylpolyethers in das Polysiloxan eingeführt wird und dass der Hydroxyalkylpolyether durch ringöffnende Polymerisation von Hydroxyoxetanen mit einer oder mehr Hydroxygruppen tragenden allylischen Startverbindungen und nachfolgende Addition von Wasser herstellbar ist.

8. Polyhydroxyfunktionelles kettenförmiges Polysiloxan nach einem der Ansprüche 1 bis 7, **dadurch gekennzeichnet, dass** der polyhydroxyfunktionelle dendritische Allylpolyether durch ringöffnende Polymerisation von Hydroxyoxetanen mit allylischen Startverbindung, die abgeleitet von einer Verbindung aus der Gruppe bestehend aus 5,5-Dihydroxymethyl-1,3-dioxan, 2-Methyl-1,3-propandiol, 2-Methyl-2-ethyl-1,3-propandiol, 2-Ethyl-2-butyl-1,3-propandiol, Neopentylglykol, Dimethylolpropan, Glycerin, Trimethylolethan, Trimethylolpropan, Diglycerin, Di(trimethylolethan), Di(trimethylolpropan), Pentaerythritol, Di(pentaerythritol), Anhydroenneaheptitol, Sorbitol and Mannitol ist, herstellbar ist.

9. Polyhydroxyfunktionelles kettenförmiges Polysiloxan nach Anspruch 8, **dadurch gekennzeichnet, dass** die Startverbindung Trimethylolpropanmonoallylether oder Glycerinmonoallylether ist.

10. Polyhydroxyfunktionelles kettenförmiges Polysiloxan nach einem der Ansprüche 1 bis 9, **dadurch gekennzeichnet, dass** als Hydroxyoxetan mindestens ein 3-Alkyl-3-(hydroxyalkyl)oxetan, 3,3-Di(hydroxyalkyl)oxetal, 3-Alkyl-3-(hydroxyalkoxy)oxetan, 3-Alkyl-3-(hydroxyalkoxyalkyl)oxetan oder ein Dimer, Trimer oder Polymer eines 3-Alkyl-3-(hydroxyalkyl)oxetans, eines 3,3-Di(hydroxyalkyl)oxetans, eines 3-Alkyl-3-(hydroxyalkoxy)oxetans oder eines 3-Alkyl-3-(hydroxyalkoxyalkyl)oxetans verwendet wird.

11. Polyhydroxyfunktionelles kettenförmiges Polysiloxan nach Anspruch 10, **dadurch gekennzeichnet, dass** als Hydroxyoxetan mindestens ein Hydroxyoxetan ausgewählt aus der Gruppe bestehend aus 3-Methyl-3-(hydroxymethyl)oxetan, 3-Ethyl-3-(hydroxymethyl)oxetan, 3,3-Di(hydroxymethyl)oxetan (Trimethylolpropanoxetan) verwendet wird.

12. Polyhydroxyfunktionelles kettenförmiges Polysiloxan nach einem der Ansprüche 1 bis 11, **dadurch gekennzeichnet, dass** die polyhydroxyfunktionelle dendritische Allylverbindung mindestens zwei verzweigende Generationen aufweist.

13. Polyhydroxyfunktionelles kettenförmiges Polysiloxan nach Anspruch 12, **dadurch gekennzeichnet, dass** die Polydispersität der dendritischen Allylverbindungen < 2,8, besonders bevorzugt < 1,7 beträgt.

14. Polyhydroxyfunktionelles kettenförmiges Polysiloxan nach einem der Ansprüche 4 bis 12, **dadurch gekennzeichnet, dass** mindestens eine freie Hydroxygruppe des Allylpolyethers chemisch modifiziert ist.

15. Polyhydroxyfunktionelles kettenförmiges Polysiloxan nach einem der Ansprüche 4 bis 12, **dadurch gekennzeichnet, dass** der Substituent Z-RK durch Addition eines unverzweigten Allylpolyethers in das Polysiloxan eingeführt wird und dass der Allylpolyether durch die Alkoxylierung von Allylalkohol oder Monoallylethern mit einer oder mehreren Hydroxygruppen mit Ethylenoxid und/oder Propylenoxid und/oder Butylenoxid und/oder Styroloxid herstellbar ist.

16. Polyhydroxyfunktionelles kettenförmiges Polysiloxan nach Anspruch 15, **dadurch gekennzeichnet, dass** der unverzweigte Polyetherrest RK ein Ethylenoxid, ein Propylenoxid oder ein Ethylenoxid-Propylenoxid-Copolymer der folgenden Formel
RK = - O - [EO]ᵥ - [PO]_{w} - R⁶
mit v = 0 - 70; bei v = 0 ist w ≥ 1;
mit w = 0 - 50; bei w = 0 ist v ≥ 1;
wobei R⁶ eine aliphatische, aromatische, araliphatische Verbindung darstellt, die auch Heteroatome enthalten kann.

17. Polyhydroxyfunktionelles kettenförmiges Polysiloxan nach Anspruch 4, **dadurch gekennzeichnet, dass** der Substituent Z-RK durch Kondensation entsprechender Verbindungen HO-Z-RK eingeführt wird.

18. Polyhydroxyfunktionelles kettenförmiges Polysiloxan nach Anspruch 4, wobei A und C gleich 0 sind und mindestens eine der Gruppen R² oder R³ für einen Rest R stehen.

19. Polyhydroxyfunktionelles kettenförmiges Polysiloxan nach Anspruch 18, wobei exakt eine der Gruppen R² oder R³ für einen Rest R steht.

20. Verfahren zur Herstellung polyhydroxyfunktioneller Polysiloxane gemäß den Ansprüchen 1 bis 14, **dadurch gekennzeichnet, dass** zunächst mindestens eine allylische Startverbindung mit mindestens einem Oxetan umgesetzt wird und dann der oder die Alkylpolyether an das Si-H-funktionelle Alkyl-Polysiloxan addiert werden.

21. Verfahren zur Herstellung polyhydroxyfunktioneller Polysiloxane gemäß den Ansprüchen 1 bis 14, **dadurch gekennzeichnet, dass** zunächst mindestens eine allylische Startverbindung an das Si-H-funktionelle Alkyl-Polysiloxan addiert wird und dann die gebundene Startverbindung mit mindestens einem Oxetan umgesetzt wird.

22. Verfahren zur Herstellung polyhydroxyfunktioneller Polysiloxane gemäß den Ansprüchen 1 bis 14, **dadurch gekennzeichnet, dass** zunächst mindestens eine einen Hydroxyalkylrest tragende Startverbindung mit mindestens einem Oxetan umgesetzt wird und dann der oder die Hydroxyalkylpolyether an das Si-H-funktionelle Alkyl-Polysiloxan kondensiert werden.

23. Verfahren zur Herstellung polyhydroxyfunktioneller Polysiloxane gemäß den Ansprüchen 1 bis 14, **dadurch gekennzeichnet, dass** zunächst mindestens eine einen Hydroxyalkylrest tragende Startverbindung an das Si-H-funktionelle Alkyl-Polysiloxan kondensiert wird und dann die gebundene Startverbindung mit mindestens einem Oxetan umgesetzt wird.

24. Verfahren zur Herstellung polyhydroxyfunktioneller Polysiloxane nach einem der Ansprüche 20 bis 23, **dadurch gekennzeichnet, dass** die freien Hydroxygruppen der Allylpolylether bzw. der Hydroxyalkylpolyether vor oder nach der Hydrosilylierung oder Kondensation mit dem Si-H-funktionellen Polysiloxan chemisch modifiziert werden.

25. Verfahren zur Herstellung polyhydroxyfunktioneller Polysiloxane nach einem der Ansprüche 20 bis 24, **dadurch gekennzeichnet, dass** nachfolgend unverzweigte Allylpolyether und/oder Allylpolyester an das Polysiloxan addiert werden.

26. Verfahren zur Herstellung polyhydroxyfunktioneller Polysiloxane nach einem der Ansprüche 20 bis 24, **dadurch gekennzeichnet, dass** unverzweigte Allylpolyether und/oder Allylpolyester im Gemisch mit verzweigten Allylpolyethern an das Polysiloxan addiert werden.

27. Verfahren zur Herstellung polyhydroxyfunktioneller Polysiloxane nach einem der Ansprüche 20 bis 24, **dadurch gekennzeichnet, dass** nachfolgend unverzweigte Hydroxyalkylpolyether an das Polysiloxan kondensiert werden.

28. Verfahren zur Herstellung polyhydroxyfunktioneller Polysiloxane nach einem der Ansprüche 20 bis 24, **dadurch gekennzeichnet, dass** unverzweigte Hydroxyalkylpolyether im Gemisch mit verzweigten Hydroxyalkylpolyethern an das Polysiloxan kondensiert werden.

29. Verwendung eines polyhydroxyfunktionellen Polysiloxans nach einem der Ansprüche 1 bis 19 als Additiv in Beschichtungsmitteln, polymeren Formmassen oder Thermoplasten.

30. Beschichtungsmittel, polymere Formmasse oder Thermoplast, enthaltend ein polyhydroxyfunktionelles Polysiloxan nach einem der Ansprüche 1 bis 19.

31. Beschichtungsmittel, enthaltend 0,1 - 10 Gew.-%, bevorzugt 0,5 - 7,5 Gew.-%, besonders bevorzugt 1 - 5 Gew.-% eines polyhydroxyfunktionelles Polysiloxans nach einem der Ansprüche 1 bis 19.

32. Polymere Formmasse enthaltend 0,1 - 10 Gew.-%, bevorzugt 0,5 - 7,5 Gew.-%, besonders bevorzugt 1 - 5 Gew.-% eines polyhydroxyfunktionelles Polysiloxans nach einem der Ansprüche 1 bis 19.

33. Thermoplast, enthaltend 0,1 - 5 Gew.-%, bevorzugt 0,2 - 2 Gew.-%, besonders bevorzugt 0,5 - 1 Gew.-% eines polyhydroxyfunktionelles Polysiloxans nach einem der Ansprüche 1 bis 19.

## Claims

1. Polyhydroxy-functional polysiloxane, **characterized in that** it can be prepared via addition of at least one branched dendritic polyhydroxy-functional allylpolyether to an Si-H-functional alkylpolysiloxane, wherein the allylpolyether can be prepared by ring-opening polymerization of hydroxyoxetanes with one or more allylic starter compounds carrying hydroxy groups.

2. Polyhydroxy-functional polysiloxane according to claim 1, **characterized in that** the alkylpolysiloxane is a methyl-hydrogen-polysiloxane.

3. Polyhydroxy-functional polysiloxane according to one of claims 1 to 2, **characterized in that** the Si-H-functional polysiloxane is a chain polymer, a cyclic polymer, a branched polymer, or a crosslinked polymer.

4. Polyhydroxy-functional chain-like polysiloxane according to one of claims 1 to 3, **characterized in that** it can be represented by the general formula 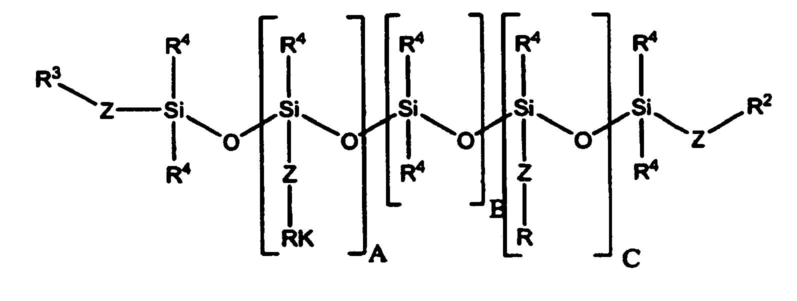 wherein
Z is C₁-C₁₄ alkylene;
RK is an unbranched polyether radical consisting of alkylene oxide units having 1 to 6 carbon atoms, and/or an aliphatic and/or cycloaliphatic and/or aromatic polyester radical having a weight-average molecular weight of between 200 and 4000 g/mol;
R is a polyhydroxy-functional branched polyether radical;
R² and R³ each independently represent
C₁-C₁₄ alkyl, aryl or aralkyl, -O(C₁-C₁₄ alkyl, aryl or aralkyl), -OCO(C₁-C₁₄-alkyl, aryl or aralkyl), -O-CO-O(C₁-C₁₄-alkyl, aryl or aralkyl), -OSO₂(C₁-C₁₄-alkyl, aryl or aralkyl), -H, -Cl, -F, -OH, -R, -RK,
R⁴ = C₁-C₁₄-alkyl, aryl or aralkyl,
A is 0 - 20, preferably 0 - 15, particularly preferably 0 - 8,
B is 2-300, preferably 10 - 200, particularly preferably 15 - 100, and
C is 0 - 20, preferably 0 - 15, particularly preferably 0 - 8;
wherein, if C = 0, R³ = R and/or R² = R.

5. Polyhydroxy-functional chain-like polysiloxane according to claim 4, **characterized in that** it consists of 10 to 100 siloxane units, preferably of 20 to 80 siloxane units, particularly preferably of 30 to 70 siloxane units.

6. Polyhydroxy-functional chain-like polysiloxane according to claim 4 or 5, **characterized in that** the polyhydroxy-functional branched polyether alkyl radical -Z-R is introduced into the polysiloxane by addition of a dendritic polyhydroxy-functional allyl polyether.

7. Polyhydroxy-functional chain-like polysiloxane according to claim 4 or 5, **characterized in that** the polyhydroxy-functional branched polyether alkyl radical -Z-R is introduced into the polysiloxane by condensation of a dendritic polyhydroxy-functional hydroxyalkyl polyether and **in that** the hydroxyalkyl polyether can be prepared by ring-opening polymerization of hydroxyoxetanes with one or more allylic starter compounds carrying hydroxy groups and subsequent addition of water.

8. Polyhydroxy-functional chain-like polysiloxane according to one of claims 1 to 7, **characterized in that** the polyhydroxy-functional dendritic allyl polyether can be prepared by ring-opening polymerization of hydroxyoxetanes with an allylic starter compound which is derived from a compound from the group consisting of 5,5-dihydroxymethyl-1,3-dioxane, 2-methyl-1,3-propanediol, 2-methyl-2-ethyl-1,3-propanediol, 2-ethyl-2-butyl-1,3-propanediol, neopentyl glycol, dimethylolpropane, glycerol, trimethylolethane, trimethylolpropane, diglycerol, di(trimethylolethane), di(trimethylolpropane), pentaerythritol, di(pentaerythritol), anhydroenneaheptitol, sorbitol, and mannitol.

9. Polyhydroxy-functional chain-like polysiloxane according to claim 8, **characterized in that** the starter compound is trimethylolpropane monoallyl ether or glycerol monoallyl ether.

10. Polyhydroxy-functional chain-like polysiloxane according to one of claims 1 to 9, **characterized in that** at least one 3-alkyl-3-(hydroxyalkyl)oxetane, 3,3-di(hydroxyalkyl)oxetane, 3-alkyl-3-(hydroxyalkoxy)oxetane, 3-alkyl-3-(hydroxyalkoxyalkyl)oxetane or a dimer, trimer, or polymer of a 3-alkyl-3-(hydroxyalkyl)-oxetane, of a 3,3-di(hydroxyalkyl)oxetane, of a 3-alkyl-3-(hydroxyalkoxy)oxetane, or of a 3-alkyl-3-(hydroxyalkoxyalkyl)oxetane is used as the hydroxyoxetane.

11. Polyhydroxy-functional chain-like polysiloxane according to claim 10, **characterized in that** at least one hydroxyoxetane selected from the group consisting of 3-methyl-3-(hydroxymethyl)oxetane, 3-ethyl-3-(hydroxymethyl)oxetane, and 3,3-di(hydroxymethyl)oxetane (trimethylolpropane oxetane) is used as the hydroxyoxetane.

12. Polyhydroxy-functional chain-like polysiloxane according to one of claims 1 to 11, **characterized in that** the polyhydroxy-functional dendritic allyl compound has at least two branching generations.

13. Polyhydroxy-functional chain-like polysiloxane according to claim 12, **characterized in that** the polydispersity of the dendritic allyl compounds is < 2.8, particularly preferably < 1.7.

14. Polyhydroxy-functional chain-like polysiloxane according to one of claims 4 to 12, **characterized in that** at least one free hydroxy group of the allyl polyether has been chemically modified.

15. Polyhydroxy-functional chain-like polysiloxane according to one of claims 4 to 12, **characterized in that** the substituent Z-RK is introduced into the polysiloxane by addition of an unbranched allyl polyether and **in that** the allyl polyether can be prepared by alkoxylating allyl alcohol or monoallyl ethers having one or more hydroxy groups with ethylene oxide and/or propylene oxide and/or butylene oxide and/or styrene oxide.

16. Polyhydroxy-functional chain-like polysiloxane according to claim 15, **characterized in that** the unbranched polyether radical RK is an ethylene oxide, a propylene oxide, or an ethylene oxide-propylene oxide copolymer of the following formula
RK = - O - [EO]ᵥ - [PO]_{w} - R⁶
with v is 0 - 70; if v = 0 then w ≥ 1;
with w is 0 - 50 ; if w = 0 then v ≥ 1;
wherein R⁶ is an aliphatic, aromatic, or araliphatic compound which may optionally contain heteroatoms.

17. Polyhydroxy-functional chain-like polysiloxane according to claim 4, **characterized in that** the substituent Z-RK is introduced by condensation of corresponding compounds HO-Z-RK.

18. Polyhydroxy-functional chain-like polysiloxane according to claim 4, wherein A and C are 0, and at least one of the groups R² and R³ represents a radical R.

19. Polyhydroxy-functional chain-like polysiloxane according to claim 18, wherein exactly one of the groups R² and R³ represents a radical R.

20. Process for preparing polyhydroxy-functional polysiloxanes according to claims 1 to 14, **characterized in that** first at least one allylic starter compound is reacted with at least one oxetane and then the allyl polyether or polyethers is / are added to the Si-H-functional alkyl polysiloxane.

21. Process for preparing polyhydroxy-functional polysiloxanes according to claims 1 to 14, **characterized in that** first at least one allylic starter compound is added to the Si-H-functional alkyl polysiloxane and then the bound starter compound is reacted with at least one oxetane.

22. Process for preparing polyhydroxy-functional polysiloxanes according to claims 1 to 14, **characterized in that** first at least one starter compound carrying a hydroxyalkyl radical is reacted with at least one oxetane and then the hydroxyalkyl polyether or polyethers is / are condensed to the Si-H-functional alkyl polysiloxane.

23. Process for preparing polyhydroxy-functional polysiloxanes according to claims 1 to 14, **characterized in that** first at least one starter compound carrying a hydroxyalkyl radical is condensed to the Si-H-functional alkyl polysiloxane and then the bound starter compound is reacted with at least one oxetane.

24. Process for preparing polyhydroxy-functional polysiloxanes according to one of claims 20 to 23, **characterized in that** the free hydroxy groups of the allyl polyethers or of the hydroxyalkyl polyethers are chemically modified before or after the hydrosilylation or condensation with the Si-H-functional polysiloxane.

25. Process for preparing polyhydroxy-functional polysiloxanes according to one of claims 20 to 24, **characterized in that** unbranched allyl polyethers and/or allyl polyesters are subsequently added to the polysiloxane.

26. Process for preparing polyhydroxy-functional polysiloxanes according to one of claims 20 to 24, **characterized in that** unbranched allyl polyethers and/or allyl polyesters in a mixture with branched allyl polyethers are added to the polysiloxane.

27. Process for preparing polyhydroxy-functional polysiloxanes according to one of claims 20 to 24, **characterized in that** unbranched hydroxyalkyl polyethers are subsequently condensed to the polysiloxane.

28. Process for preparing polyhydroxy-functional polysiloxanes according to one of claims 20 to 24, **characterized in that** unbranched hydroxyalkyl polyethers in a mixture with branched hydroxyalkyl polyethers are condensed to the polysiloxane.

29. Use of a polyhydroxy-functional polysiloxane according to one of claims 1 to 19 as an additive in coating agents, polymeric moulding compounds, or thermoplastics.

30. Coating agent, polymeric moulding compound, or thermoplastic comprising a polyhydroxy-functional polysiloxane according to one of claims 1 to 19.

31. Coating agent, containing 0.1 - 10 % by weight, preferably 0.5 - 7.5 % by weight, particularly preferably 1 - 5 % by weight of a polyhydroxy-functional polysiloxane according to one of claims 1 to 19.

32. Polymeric moulding compound, containing 0.1 - 10 % by weight, preferably 0.5 - 7.5 % by weight, particularly preferably 1 - 5 % by weight of a polyhydroxy-functional polysiloxane according to one of claims 1 to 19.

33. Thermoplastic, containing 0.1 - 5 % by weight, preferably 0.2 - 2 % by weight, particularly preferably 0.5 - 1 % by weight of a polyhydroxy-functional polysiloxane according to one of claims 1 to 19.

## Revendications

1. Polysiloxane polyhydroxyfonctionnel, **caractérisé en ce qu'**il peut être fabriqué par addition d'au moins un allylpolyéther polyhydroxyfonctionnel dendritique ramifié à un alkylpolysiloxane Si-H-fonctionnel, l'allylpolyéther pouvant être fabriqué par polymérisation à ouverture de cycle d'hydroxyoxétanes avec un ou plusieurs composés de départ allyliques porteurs de groupements hydroxy.

2. Polysiloxane polyhydroxyfonctionnel selon la revendication 1, **caractérisé en ce que** l'alkylpolysiloxane est un polysiloxane d'hydrométhyle.

3. Polysiloxane polyhydroxyfonctionnel selon l'une des revendications 1 à 2, **caractérisé en ce que** le polysiloxane Si-H-fonctionnel est un polymère à chaîne, un polymère cyclique, un polymère ramifié ou un polymère réticulé.

4. Polysiloxane polyhydroxyfonctionnel en forme de chaîne selon l'une des revendications 1 à 3, **caractérisé en ce qu'**il est représenté par la formule générale 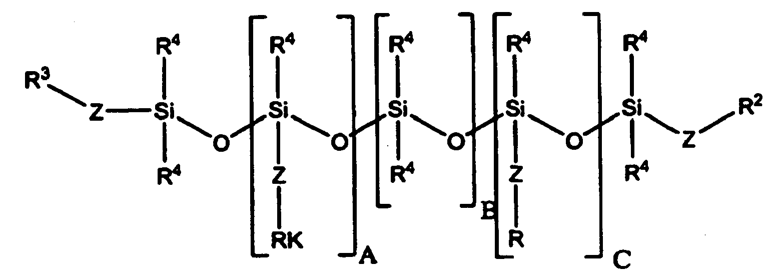 où
Z = alkylène en C₁-C₁₄,
RK = groupe fonctionnel polyéther non ramifié dérivé d'unités d'oxyde d'alkylène présentant 1 à 6 atomes de carbone, et/ou groupe fonctionnel polyester aliphatique et/ou cycloaliphatique et/ou aromatique présentant un poids moléculaire moyen en poids compris entre 200 et 4000 g/mol,
R = groupe fonctionnel polyéther ramifié polyhydroxyfonctionnel,
R² et R³ représentent, indépendamment l'un de l'autre,
alkyle, aryle ou aralkyle en C₁-C₁₄, -O(C₁-C₁₄-alkyle, -aryle ou -aralkyle), - OCO(C₁-C₁₄-alkyle, -aryle ou -aralkyle), -O-CO-O(C₁-C₁₄-alkyle, -aryle ou - aralkyle), -OSO₂(C₁-C₁₄-alkyle, -aryle ou -aralkyle), -H, -Cl, -F, -OH, -R, -RK,
R⁴ = alkyle, aryle ou aralkyle en C₁-C₁₄,
A = 0 à 20, de préférence 0 à 15, plus préférablement 0 à 8,
B = 2 à 300, de préférence 10 à 200, plus préférablement 15 à 100 et
C = 0 à 20, de préférence 0 à 15, plus préférablement 0 à 8 ;
où R³ = R et/ou R² = R si C = 0.

5. Polysiloxane polyhydroxyfonctionnel en forme de chaîne selon la revendication 4, **caractérisé en ce qu'**il comprend 10 à 100 unités de siloxane, de préférence 20 à 80 unités de siloxane, plus préférablement 30 à 70 unités de siloxane.

6. Polysiloxane polyhydroxyfonctionnel en forme de chaîne selon la revendication 4 ou 5, **caractérisé en ce que** le groupe fonctionnel polyétheralkyle ramifié polyhydroxyfonctionnel -Z-R est introduit par addition d'un allylpolyéther polyhydroxyfonctionnel dendritique dans le polysiloxane.

7. Polysiloxane polyhydroxyfonctionnel en forme de chaîne selon la revendication 4 ou 5, **caractérisé en ce que** le groupe fonctionnel polyétheralkyle ramifié polyhydroxyfonctionnel -Z-R est introduit par condensation d'un hydroxyalkylpolyéther polyhydroxyfonctionnel dendritique dans le polysiloxane et que l'hydroxyalkylpolyéther peut être fabriqué par polymérisation à ouverture de cycle d'hydroxyoxétanes avec un ou plusieurs composés de départ allyliques porteurs de groupements hydroxy et addition ultérieure d'eau.

8. Polysiloxane polyhydroxyfonctionnel en forme de chaîne selon l'une des revendications 1 à 7, **caractérisé en ce que** l'allylpolyéther dendritique polyhydroxyfonctionnel peut être fabriqué par polymérisation à ouverture de cycle d'hydroxyoxétanes avec un composé de départ allylique qui est dérivé d'un composé sélectionné dans le groupe consistant en 5,5-dihydroxyméthyl-1,3-dioxane, 2-méthyl-1,3-propanediol, 2-méthyl-2-éthyl-1,3-propanediol, 2-éthyl-2-butyl-1,3-propanediol, néopentylglycol, diméthylolpropane, glycérine, triméthyloléthane, triméthylolpropane, diglycérine, di(triméthyloléthane), di(triméthylolpropane), pentaérythritol, di(pentaérythritol), anhydro-ennéa-heptitol, sorbitol et mannitol.

9. Polysiloxane polyhydroxyfonctionnel en forme de chaîne selon la revendication 8, **caractérisé en ce que** le composé de départ est du monoallyléther de triméthylolpropane ou du monoallyléther de glycérine.

10. Polysiloxane polyhydroxyfonctionnel en forme de chaîne selon l'une des revendications 1 à 9, **caractérisé en ce qu'**au moins un 3-alkyl-3-(hydroxyalkyl)oxétane, 3,3-di(hydroxyalkyl)oxétane, 3-alkyl-3-(hydroxyalkoxy)oxétane, 3-alkyl-3-(hydroxyalkoxyalkyl)oxétane ou un dimère, trimère ou polymère d'un 3-alkyl-3-(hydroxyalkyl)oxétane, d'un 3,3-di(hydroxyalkyl)oxétane, d'un 3-alkyl-3-(hydroxyalkoxy)oxétane ou d'un 3-alkyl-3-(hydroxyalkoxyalkyl)oxétane est utilisé comme hydroxyoxétane.

11. Polysiloxane polyhydroxyfonctionnel en forme de chaîne selon la revendication 10, **caractérisé en ce qu'**au moins un hydroxyoxétane sélectionné dans le groupe consistant en 3-méthyl-3-(hydroxyméthyl)oxétane, 3-éthyl-3-(hydroxyméthyl)oxétane, 3,3-di(hydroxyméthyl)oxétane (oxétane de triméthylolpropane) est utilisé comme hydroxyoxétane.

12. Polysiloxane polyhydroxyfonctionnel en forme de chaîne selon l'une des revendications 1 à 11, **caractérisé en ce que** le composé allylique dendritique polyhydroxyfonctionnel présente au moins deux générations de ramification.

13. Polysiloxane polyhydroxyfonctionnel en forme de chaîne selon la revendication 12, **caractérisé en ce que** la polydispersité des composés allyliques dendritiques est inférieure à 2,8, plus préférablement inférieure à 1,7.

14. Polysiloxane polyhydroxyfonctionnel en forme de chaîne selon l'une des revendications 4 à 12, **caractérisé en ce qu'**au moins un groupement hydroxy libre de l'allylpolyéther est modifié chimiquement.

15. Polysiloxane polyhydroxyfonctionnel en forme de chaîne selon l'une des revendications 4 à 12, **caractérisé en ce que** le substituant Z-RK est introduit par addition d'un allylpolyéther non ramifié dans le polysiloxane et que l'allylpolyéther peut être fabriqué par alcoxylation d'alcool allylique ou d'éthers monoallyliques ayant un ou plusieurs groupements hydroxy avec de l'oxyde d'éthylène et/ou de l'oxyde de propylène et/ou de l'oxyde de butylène et/ou de l'oxyde de styrène.

16. Polysiloxane polyhydroxyfonctionnel en forme de chaîne selon la revendication 15, **caractérisé en ce que** le groupe fonctionnel polyéther non ramifié RK est un oxyde d'éthylène, un oxyde de propylène ou un copolymère oxyde d'éthylène-oxyde de propylène de formule suivante
RK = - O - [EO]ᵥ - [PO]_{w} - R⁶
où v = 0 à 70 ; w ≥ 1 si v = 0;
où w = 0 à 50 ; v ≥ 1 si w = 0;
R⁶ représentant un composé aliphatique, aromatique, araliphatique qui peut également comporter des hétéroatomes.

17. Polysiloxane polyhydroxyfonctionnel en forme de chaîne selon la revendication 4, **caractérisé en ce que** le substituant Z-RK est introduit par condensation de composés correspondants HO-Z-RK.

18. Polysiloxane polyhydroxyfonctionnel en forme de chaîne selon la revendication 4, dans lequel A et C sont 0 et au moins l'un des groupements R² ou R³ représente un groupe fonctionnel R.

19. Polysiloxane polyhydroxyfonctionnel en forme de chaîne selon la revendication 18, dans lequel exactement un des groupements R² ou R³ représente un groupe fonctionnel R.

20. Procédé de fabrication de polysiloxanes polyhydroxyfonctionnels selon les revendications 1 à 14, **caractérisé en ce qu'**au moins un composé de départ allylique est tout d'abord réagi avec au moins un oxétane, puis le ou les allylpolyéthers sont additionnés sur l'alkylpolysiloxane Si-H-fonctionnel.

21. Procédé de fabrication de polysiloxanes polyhydroxyfonctionnels selon les revendications 1 à 14, **caractérisé en ce qu'**au moins un composé de départ allylique est tout d'abord additionné sur l'alkylpolysiloxane Si-H-fonctionnel, puis le composé de départ lié est réagi avec au moins un oxétane.

22. Procédé de fabrication de polysiloxanes polyhydroxyfonctionnels selon les revendications 1 à 14, **caractérisé en ce qu'**au moins un composé de départ porteur d'un groupe fonctionnel hydroxyalkyle est tout d'abord réagi avec au moins un oxétane, puis le ou les hydroxyalkylpolyéthers sont condensés sur l'alkylpolysiloxane Si-H-fonctionnel.

23. Procédé de fabrication de polysiloxanes polyhydroxyfonctionnels selon les revendications 1 à 14, **caractérisé en ce qu'**au moins un composé de départ porteur d'un groupe fonctionnel hydroxyalkyle est tout d'abord condensé sur l'alkylpolysiloxane Si-H-fonctionnel, puis le composé de départ lié est réagi avec au moins un oxétane.

24. Procédé de fabrication de polysiloxanes polyhydroxyfonctionnels selon l'une des revendications 20 à 23, **caractérisé en ce que** les groupements hydroxy libres des allylpolyéthers resp. des hydroxyalkylpolyéthers sont modifiés chimiquement avant ou après l'hydrosilylation ou la condensation avec le polysiloxane Si-H-fonctionnel.

25. Procédé de fabrication de polysiloxanes polyhydroxyfonctionnels selon l'une des revendications 20 à 24, **caractérisé en ce que** des allylpolyesters et/ou allylpolyéthers non ramifiés sont ultérieurement additionnés sur le polysiloxane.

26. Procédé de fabrication de polysiloxanes polyhydroxyfonctionnels selon l'une des revendications 20 à 24, **caractérisé en ce que** des allylpolyesters et/ou allylpolyéthers non ramifiés mélangés à des allylpolyéthers ramifiés sont additionnés sur le polysiloxane.

27. Procédé de fabrication de polysiloxanes polyhydroxyfonctionnels selon l'une des revendications 20 à 24, **caractérisé en ce que** des hydroxyalkylpolyéthers non ramifiés sont ultérieurement condensés sur le polysiloxane.

28. Procédé de fabrication de polysiloxanes polyhydroxyfonctionnels selon l'une des revendications 20 à 24, **caractérisé en ce que** des hydroxyalkylpolyéthers non ramifiés mélangés à des hydroxyalkylpolyéthers ramifiés sont condensés sur le polysiloxane.

29. Utilisation d'un polysiloxane polyhydroxyfonctionnel selon l'une des revendications 1 à 19 comme additif dans des agents de revêtement, matières à mouler polymères ou matières thermoplastiques.

30. Agent de revêtement, matière à mouler polymère ou matière thermoplastique contenant un polysiloxane polyhydroxyfonctionnel selon l'une des revendications 1 à 19.

31. Agent de revêtement contenant de 0,1 à 10 % en poids, de préférence 0,5 à 7,5 % en poids, plus préférablement 1 à 5 % en poids d'un polysiloxane polyhydroxyfonctionnel selon l'une des revendications 1 à 19.

32. Matière à mouler polymère contenant de 0,1 à 10 % en poids, de préférence 0,5 à 7,5 % en poids, plus préférablement 1 à 5 % en poids d'un polysiloxane polyhydroxyfonctionnel selon l'une des revendications 1 à 19.

33. Matière thermoplastique contenant de 0,1 à 5 % en poids, de préférence 0,2 à 2 % en poids, plus préférablement 0,5 à 1 % en poids d'un polysiloxane polyhydroxyfonctionnel selon l'une des revendications 1 à 19.
